# EUROPEAN PATENT SPECIFICATION

(11) **EP 2 990 220 B1**
(45) Date of publication and mention of the grant of the patent: **23.08.2017**
(21) Application number: 14788476.1
(22) Date of filing: 25.04.2014
(51) Int. Cl.: B60C 9/00, B60C 1/00, B60C 5/01, B60C 9/22, D07B 1/06, D07B 1/16, B29B 15/08, B29D 30/16, B29B 15/12

(54) **TIRE COMPRISING A TIRE FRAME AND A REINFORCING METAL CORD MEMBER**
REIFEN MIT EINER REIFENSTRUKTUR UND EINEM METALLENEN VERSTÄRKUNGSELEMENT
PNEUMATIQUE AVEC UNE STRUCTURE DE PNEU ET UN ÉLÉMENT RENFORCEMENT MÉTALLIQUE

(30) Priority: 25.04.2013 JP 2013092921
(43) Date of publication of application: 02.03.2016
(73) Proprietor: Bridgestone Corporation, Tokyo 104-8340 (JP)
(72) Inventor: MACHIDA, Kunio, Tokyo 104-8340 (JP); KOUNO, Yoshihide, Tokyo 104-8340 (JP)
(74) Representative: Oxley, Robin John George
(86) International application number: PCT/JP2014/061794
(87) International publication number: WO 2014/175453

(56) References cited:
- EP-A1- 2 474 586
- WO-A1-2011/027524
- JP-A- 2010 053 495
- JP-A- 2010 053 495
- JP-A- 2011 042 235
- JP-A- 2011 042 235
- JP-A- 2012 066 809
- US-A- 6 133 375
- US-A1- 2012 267 023

## Description

### Technical Field

The present invention relates to a tire for fitting onto a rim.

### Background Art

Pneumatic tires configured from rubber, organic fiber materials, steel members, and the like have been conventionally employed in vehicles, such as cars.

Recently, the use of resin materials, in particular thermoplastic polymer materials such as thermoplastic resins and thermoplastic elastomers, as tire materials is being investigated from the perspectives of weight reduction, ease of molding, and ease of recycling. For example, Japanese Patent Application Laid-Open (JP-A) No. 2003-104008 discloses pneumatic tires formed using a thermoplastic polymer material.

A tire in which a polymer material with thermoplastic properties is used is more easily manufactured and lower in cost than a conventional rubber-made tire. However, in a case in which a tire is formed exclusively with a uniform thermoplastic resin without incorporating a reinforcing member, such as a carcass ply, such as in Japanese Patent Application Laid-Open (JP-A) No. 2003-104008, it is difficult to achieve a tire that withstands stress and internal pressure, and exhibits rigidity similarly to conventional rubber-made tires. There has been demand of tires using a thermoplastic polymer material to achieve a performance that is compared favorably to conventional rubber-made tires.

As an approach for enhancing the durability of a tire, for example, it has been proposed a method in which a reinforcing layer, in which a reinforcing cord is wound in a continuous helical shape along a tire circumferential direction, is provided on an outer surface in a tire radial direction of a tread bottom portion of a tire main body (tire frame), whereby a cut resistance performance and a puncture resistance performance of the tire main body are improved (for example, see JP-A No. H03-143701). As a technique related to steel cords (wires) used in reinforcing layers (belt layers), a steel cord for a tire employable in a carcass layer, a bead reinforcing layer, and a belt layer of a radial tire (for example, see Japanese Patent No. 4423772), and a steel cord for reinforcing a tire in which a steel cord body is covered by a thermoplastic elastomer composition in which an elastomer is dispersed in a thermoplastic resin (for example, see JP-ANo. 2010-53495) have been proposed. JP2012-066809 and JP2011-042235 disclose a circular tire frame. US2012-0267023 discloses a composite reinforcer.

### SUMMARY OF INVENTION

### Technical Problem

Generally, in terms of tire performance, there is demand for sufficient fixing of a reinforcing cord to a tire frame in a case in which a reinforcing cord is used. However, in a case in which a metal member, such as a steel cord, is used as a reinforcing cord, it is difficult to achieve satisfactory adhesion between the reinforcing cord and the tire frame under ordinary molding conditions. As a result of investigation, the present inventors have found that the durability of a tire itself can be improved by improving the adhesion durability between a tire frame and a reinforcing member, such as a steel cord.

In contrast to this, the steel cord for a tire described in Japanese Patent No. 4423772 has a thermoplastic elastomer composition filled into a steel structure that has a twist construction of a core formed of a wire, and a sheath. However, such a technique is intended for installation to rubber-made radial tires, and Japanese Patent No. 4423772 fails to disclose a relationship between a tire in which a resin material is used and a reinforcing member. The steel cord for a tire described JP-A No. 2010-53495 is also intended for installation to rubber-made radial tires, and JP-A No. 2010-53495 fails to disclose improving the adhesion durability between a reinforcing member and a tire frame for tires in which a resin material is used as a tire frame.

The present invention has been made in view of the above circumstances, and an object of the invention is to provide a tire that has a tire frame formed from a resin material and is excellent in durability.

### Solution to Problem

A concrete means for achieving the above object is as described below.

A tire comprising:
a circular tire frame formed from a resin material; and
a reinforcing metal cord member that is wound on an outer circumference of the tire frame, at least a portion of the reinforcing metal cord member being covered, via an adhesion layer including a hot melt adhesive, with a covering composition that comprises at least one thermoplastic material selected from the group consisting of a thermoplastic resin and a thermoplastic elastomer, wherein the hot-melt adhesive comprises at least one kind selected from a modified olefin-based resin, an ethylene-ethyl acrylate copolymer, or an ethylene-vinyl acetate copolymer.

In the present specification, the concept of "resin" includes thermoplastic resins and thermoset resins, but does not include vulcanized rubbers, such as conventional natural rubbers and synthetic rubbers.

In the below description of resins, components of "the same type" means those main chains of which being formed of a common skeleton, examples of which including ester-based ones or styrene-based ones.

In the present specification, a numerical range expressed using "from A to B" means a range including A and B as a lower limit value and an upper limit value respectively.

In addition, the term "process" means not only an individual process but also a process in which an expected object in the process is attained even when the process cannot be clearly distinguished from one or more other processes.

### Effects of Invention

According to the invention, a tire that has a tire frame formed from a resin material and is excellent in durability can be provided.

### BRIEF DESCRIPTION OF DRAWINGS

FIG. 1A is a perspective view illustrating a cross-section of a portion of a tire according to an embodiment of the invention.
FIG. 1B is a cross-sectional view of a bead portion that has been fitted onto a rim.
FIG. 2 is a cross-sectional view taken along a tire rotation axis and illustrating a state in which a resin-covered cord is embedded in a crown portion of a tire case of a tire according to a first embodiment.
FIG. 3 is an explanatory diagram for describing an operation that provides the resin-covered cord in the crown portion of the tire case using a resin-covered cord heating device and rollers.
FIG. 4 is a cross-sectional view taken along the tire rotation axis and illustrating a state in which a reinforcing cord covering layer in which a reinforcing metal cord member is embedded is on the crown portion of the tire case of the tire according to a second embodiment.

### DESCRIPTION OF EMBODIMENTS

Specific embodiments of the invention will be described in detail hereinafter. However, it should be noted that the invention is not restricted to the embodiments below but can be carried out with appropriate modification within the scope of the object of the invention.

A tire of the invention includes a circular tire frame formed from a resin material, and a reinforcing metal cord member that is wound on an outer circumference of the tire frame, in which at least a portion of the reinforcing metal cord member is covered, via an adhesion layer including a hot melt adhesive, with a covering composition that includes at least one thermoplastic material selected from a thermoplastic resin or a thermoplastic elastomer.

In the invention, to realize a tire that has a tire frame formed from a resin material as well as excellent durability, at least a portion of the reinforcing metal cord member is covered, via an adhesion layer including a hot melt adhesive, with a covering composition that includes at least one thermoplastic material selected from a thermoplastic resin or a thermoplastic elastomer.

In a case in which the tire is manufactured using the reinforcing metal cord member, the metal reinforcing member is desirably sufficiently fixed to the tire frame in view of the durability of the tire. In view of the durability of the tire, remaining of air (air bubbles) in the surrounding of the cord that may cause movement of the reinforcing metal cord member is preferably suppressed during tire manufacture. In view of ride quality of an automobile or the like, the material used for the tire frame of the resin tire is preferably flexible. However, in a case in which a rigid member, such as a steel cord, is employed as the reinforcing metal cord member, there is a large difference in elastic modulus (a rigidity difference) between the flexible resin material and the reinforcing metal cord member, and it becomes difficult to maintain sufficient adhesion durability between the tire frame and the reinforcing metal cord member.

In the invention, at least a portion of the reinforcing cord member is covered, via an adhesion layer including a hot melt adhesive, with a covering composition that includes at least one thermoplastic material selected from a thermoplastic resin or a thermoplastic elastomer so that the reinforcing metal cord member and the covering composition are firmly fixed to each other and pull-out resistance of the reinforcing metal cord member relative to the covering composition is improved. In the invention, the covering composition is present at an interface between the metal reinforcing member and the resin material forming the tire frame so that the rigidity difference between the reinforcing metal cord member and the tire frame is reduced. As a result, in the invention, the adhesion durability between the reinforcing metal cord member and the tire frame is improved. By winding the reinforcing metal cord member, which is excellent in the adhesion durability relative to the tire frame, on the outer circumference portion of the tire frame, the durability of the tire (a puncture resistance performance, a cut resistance performance, a tire circumferential direction rigidity, and the like) is improved. The improvement in the circumferential direction rigidity leads suppression of creep of the tire frame formed of the resin material (phenomenon in which plastic deformation of the tire frame under a constant stress increases as the time passes).

In the invention, the tire frame is formed of the resin material. Therefore, a vulcanization process, which has been an essential process for conventional rubber-made tires, is unnecessary, and, for example, the tire frame may be formed by an injection molding. Therefore, productivity can be improved in terms of simplification of the manufacturing process, reduction in time and cost, and the like. Moreover, employing a resin material for the tire frame enables the structure of a tire to be simplified compared to conventional rubber-made tires, and consequently enables a tire weight reduction. Thereby, abrasion resistance and durability of the tire can be improved when the tire frame is formed.

Hereinafter, the reinforcing metal cord member, the covering composition that covers the same, the hot melt adhesive included in the adhesion layer interposed between the reinforcing metal cord member and the covering composition, and the resin material which forms the tire frame in the invention will be described in this order, and then specific embodiments of the tire of the invention will be described with reference to the accompanying drawings.

### [Reinforcing metal cord member]

A metal cord or the like employed in conventional rubber-made tires may be employed as the reinforcing metal cord member in the invention as appropriate,. Examples that may be employed as the reinforcing metal cord member in the invention include a monofilament (single) strand of metal fiber, and a multifilament strand (twisted strand) such as a steel cord formed of twisted steel fibers. As the reinforcing metal cord member in the invention, a multifilament is preferable in view of further improvement of the durability of the tire. The cross-sectional shape, size (diameter), or the like, of the reinforcing metal cord member are not particularly limited, and may be appropriately selected and employed as appropriate to the desired tire.

A single strand, or plural strands, of the reinforcing metal cord member may be wound on the tire frame in a circumferential direction, and may be wound in a continuous helical shape continuously along the circumferential direction. The reinforcing metal cord member may be wound in the circumferential direction so as to be evenly spaced along a width direction of the tire frame, or may be wound so as to cross over itself.

The tensile elastic modulus (hereinafter in the present specification, "elastic modulus" means tensile elastic modulus unless otherwise stated) of the reinforcing metal cord member itself is normally from approximately 100000 MPa to approximately 300000 MPa, preferably from 120000 MPa to 270000 MPa, and more preferably from 150000 MPa to 250000 MPa. Note that the tensile elastic modulus of the reinforcing metal cord member is calculated from the gradient of a stress-strain curve plotted using a ZWICK-type chuck in a tensile test machine.

The elongation at break (tensile elongation at break) of the reinforcing metal cord member itself is normally from approximately 0.1% to approximately 15%, preferably from 1% to 15%, and more preferably from 1% to 10%. The tensile elongation at break of the reinforcing metal cord member may be determined from the strain obtained by a stress-strain curve plotted using ZWICK-type chuck in a tensile test machine.

The reinforcing cord member in the invention is wound on the outer circumference portion of the tire frame, in which at least a portion of the reinforcing cord member is covered, via an adhesion layer including a hot melt adhesive described below, with a covering composition that includes at least one thermoplastic material selected from a thermoplastic resin or a thermoplastic elastomer described below. "At least a portion of the reinforcing metal cord member is covered, via an adhesion layer including a hot melt adhesive, with a covering composition that includes at least one thermoplastic material selected from a thermoplastic resin or a thermoplastic elastomer" means a state in which a portion or the entirety of the surface of the reinforcing metal cord member is covered with the covering composition with the adhesion layer.

Examples of a state in which a portion or the entirety of the surface of the reinforcing metal cord member is covered with the covering composition with the adhesion layer may include: a state in which, with making the reinforcing metal cord member as a core, a portion or the entirety of an outer circumference thereof is covered with the covering composition with the adhesion layer; and a state in which a portion or the entirety of the reinforcing metal cord member is embedded in a reinforcing cord covering layer under a condition in which the reinforcing cord covering layer including the covering composition is provided on the outer circumference portion of the tire frame with interposing the adhesion layer therebetween.

In the invention, it is preferable that a portion of the reinforcing metal cord member that acts as an interface between the reinforcing metal cord member and the tire frame is covered in its entirety by the covering composition, and it is more preferable that the entire surface of the reinforcing metal cord member is covered with the covering composition.

### [Covering Composition]

The covering composition that covers the reinforcing metal cord member in the invention includes at least one thermoplastic material selected from a thermoplastic resin or a thermoplastic elastomer.

The thermoplastic material included in the covering composition is preferably at least one selected from a polyamide-based thermoplastic resin, a polyester-based thermoplastic resin, an olefin-based thermoplastic resin, a polyamide-based thermoplastic elastomer, a polyester-based thermoplastic elastomer, or an olefin-based thermoplastic elastomer, and more preferably at least one selected from a polyamide-based thermoplastic elastomer, a polyester-based thermoplastic elastomer, or an olefin-based thermoplastic elastomer.

In the present specification, a "thermoplastic resin" means a polymer compound which softens and flows as a temperature increases, and which becomes comparatively hard and acquires a strength as cooled, while which does not have rubber-like elasticity.

In the present specification, a "thermoplastic elastomer" means a polymer compound formed by a copolymer, the copolymer including: a polymer which forms a hard segment that is crystalline and has a high melting temperature or a hard segment that has a high cohesive force; and a polymer which forms a soft segment that is amorphous and has a low glass transition temperature, the polymer compound being a material which softens and flows as a temperature increases, which becomes comparatively hard and acquires a strength as cooled, while which does not have rubber-like elasticity.

### (Thermoplastic resin)

Examples of a thermoplastic resin to be contained in a coating composition include those similar to a thermoplastic resin to be used in a tire frame described below, and specific examples thereof include a polyamide-based thermoplastic resin, a polyester-based thermoplastic resin, an olefin-based thermoplastic resin, a polyurethane-based thermoplastic resin, a poly(vinyl chloride)-based thermoplastic resin, and a polystyrene-based thermoplastic resin. The resins may be used singly or in a combination of two or more kinds thereof. As a thermoplastic resin among them, at least one kind selected from a polyamide-based thermoplastic resin, a polyester-based thermoplastic resin, or an olefin-based thermoplastic resin is preferable, and at least one kind selected from a polyamide-based thermoplastic resin or an olefin-based thermoplastic resin is more preferable.

When at least one of a polyamide-based thermoplastic resin or an olefin-based thermoplastic resin is used as a thermoplastic material to be contained in a coating composition, the adhesiveness with an adhesion layer containing a hot-melt adhesive described below becomes higher. Therefore, a reinforcing metal cord member and a coating composition are fixed together firmly, so that the pull-out resistance of a reinforcing metal cord member from the coating composition can be enhanced.

A thermoplastic resin to be contained in the coating composition is preferably selected considering the adhesiveness with a resin material to be used in the tire frame. Especially, when a resin material used for forming the tire frame and a thermoplastic resin to be contained in the coating composition are of the same type, the adhesiveness between the tire frame and the coating composition can be further enhanced. For example, when a polyamide-based thermoplastic resin is used as a thermoplastic resin to be contained in the coating composition, a polyamide-based thermoplastic elastomer is preferably used as a resin material for forming the tire frame.

### - Polyamide-based thermoplastic resin -

Examples of the polyamide-based thermoplastic resin include a polyamide constituting a hard segment of a polyamide-based thermoplastic elastomer to be used in the tire frame described below. Specific examples of a polyamide-based thermoplastic resin include a polyamide formed by ring-opening polycondensation of ε-caprolactam (amide 6), a polyamide formed by ring-opening polycondensation of undecane lactam (amide 11), a polyamide formed by ring-opening polycondensation of lauryl lactam (amide 12), a polyamide formed by polycondensation of a diamine and a dibasic acid (amide 66), and a polyamide having *meta*-xylylenediamine as a structural unit (amide MX).

An amide 6 can be expressed, for example, by [CO-(CH₂)₅-NH]ₙ. An amide 11 can be expressed, for example, by [CO-(CH₂)₁₀-NH]ₙ. An amide 12 can be expressed, for example, by [CO-(CH₂)₁₁-NH]ₙ. An amide 66 can be expressed, for example, by [CO(CH₂)₄CONH(CH₂)₆NH]ₙ. An amide MX can be expressed, for example, by the following structural formula (A-1). In this regard, n represents the number of recurring units.

As a commercial product of an amide 6, for example, "UBE nylon" series (for example, 1022B, and 1011FB) produced by UBE Industries, Ltd., may be used. As a commercial product of an amide 11, for example, "RILSAN B" series produced by Arkema, may be used. As a commercial product of an amide 12, for example, "UBE nylon" series (for example, 3024U, 3020U, and 3014U) produced by UBE Industries, Ltd., may be used. As a commercial product of an amide 66, for example, "UBE nylon" series (for example, 2020B, and 2015B) produced by UBE Industries, Ltd., may be used. As a commercial product of an amide MX, for example, "MX nylon" series (for example, S6001, S6021, and S6011) produced by Mitsubishi Gas Chemical Co., Inc., may be used.

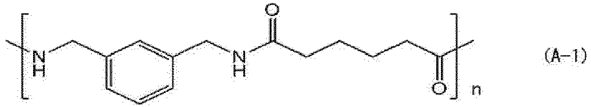

A polyamide-based thermoplastic resin may be a homopolymer constituted solely with the above structural unit, or may be a copolymer of the structural unit and another monomer. In the case of a copolymer, the content of the structural unit in each of polyamide-based thermoplastic resins is preferably 40 mass-% or more.

### - Polyester-based thermoplastic resin -

Examples of the polyester-based thermoplastic resin include a polyester constituting a hard segment of a polyester-based thermoplastic elastomer to be used for the tire frame described below.

Specific examples of the polyester-based thermoplastic resin include an aliphatic polyester such as poly(lactic acid), polyhydroxy-3-butyl butyrate, polyhydroxy-3-hexyl butyrate, poly(ε-caprolactone), polyenantholactone, polycaprylolactone, poly(butylene adipate), or poly(ethylene adipate), and an aromatic polyester such as poly(ethylene terephthalate), poly(butylene terephthalate), poly(styrene terephthalate), poly(ethylene naphthalate), or poly(butylene naphthalate). Among them, from viewpoints of heat resistance and processability, poly(butylene terephthalate) is preferable as the polyester-based thermoplastic resin.

As a commercial product of the polyester-based thermoplastic resin, for example, "DURANEX" series (for example, 2000, and 2002) produced by Polyplastics Co., Ltd., "NOVADURAN" series (for example, 5010R5, and 5010R3-2) produced by Mitsubishi Engineering-Plastics Corporation, and "TORAYCON" series (for example, 1401X06, and 1401X31) produced by Toray Industries, Inc., may be used.

### - Olefin-based thermoplastic resin -

Examples of the olefin-based thermoplastic resin include a polyolefin constituting a hard segment of an olefin-based thermoplastic elastomer to be used for the tire frame described below.

Specific examples of the olefin-based thermoplastic resin include a polyethylene-base thermoplastic resin, a polypropylene-base thermoplastic resin, and a polybutadiene-base thermoplastic resin. Among them, from standpoints of heat resistance and processability, a polypropylene-base thermoplastic resin is preferable as an olefin-based thermoplastic resin.

Specific examples of the polypropylene-base thermoplastic resin include a propylene homopolymer, a propylene/α-olefin random copolymer, and a propylene/α-olefin block copolymer. Examples of the α-olefin include an α-olefin having carbon atoms of from approximately 3 to 20, such as propylene, 1-butene, 1-pentene, 3-methyl-1-butene, 1-hexene, 4-methyl-1-pentene, 3-methyl-1-pentene, 1-heptene, 1-octene, 1-decene, 1-dodecene, 1-tetradecene, 1-hexadecene, 1-octadecene, or 1-eicosene.

### (Thermoplastic elastomer)

Examples of the thermoplastic elastomer to be contained in the coating composition include those of the same type as a thermoplastic elastomer to be used in the tire frame described below. Specific examples of the thermoplastic elastomer include a polyamide-based thermoplastic elastomer, a polyester-based thermoplastic elastomer, an olefin-based thermoplastic elastomer, and a polyurethane-based thermoplastic elastomer. The elastomers may be used singly or in a combination of two or more kinds thereof. As a thermoplastic elastomer among them, at least one kind selected from a polyamide-based thermoplastic elastomer, a polyester-based thermoplastic elastomer, or an olefin-based thermoplastic elastomer is preferable, and at least one kind selected from a polyamide-based thermoplastic elastomer, or an olefin-based thermoplastic elastomer is more preferable. When at least one of a polyamide-based thermoplastic elastomer or an olefin-based thermoplastic elastomer is used as a thermoplastic material to be contained in a coating composition, the adhesiveness with an adhesion layer containing a hot-melt adhesive described below becomes higher. Therefore, a reinforcing metal cord member and a coating composition are fixed together firmly, so that the pull-out resistance of a reinforcing metal cord member from the coating composition can be enhanced.

Further, a thermoplastic elastomer to be contained in a coating composition is preferably selected considering the adhesiveness with a resin material to be used in the tire frame. Especially, when a resin material used for forming the tire frame and for a thermoplastic elastomer to be contained in the coating composition resins are of the same type, the adhesiveness between the tire frame and the coating composition can be further enhanced. For example, when a polyamide-based thermoplastic elastomer is used as a thermoplastic elastomer to be contained in the coating composition, a polyamide-based thermoplastic elastomer is preferably used as a resin material for forming the tire frame.

### - Polyamide-based thermoplastic elastomer-

The polyamide-based thermoplastic elastomer is similar to a polyamide-based thermoplastic elastomer to be used in the tire frame described below, and a preferable embodiment is also similar. Therefore, detailed descriptions are omitted here.

### - Polyester-based thermoplastic elastomer -

The polyester-based thermoplastic elastomer is similar to a polyester-based thermoplastic elastomer to be used in the tire frame described below, and a preferable embodiment is also similar. Therefore, detailed descriptions are omitted here.

### - Olefin-based thermoplastic elastomer -

The olefin-based thermoplastic elastomer is similar to an olefin-based thermoplastic elastomer to be used in the tire frame described below, and a preferable embodiment is also similar. Therefore, detailed descriptions are omitted here.

### (Embodiments of thermoplastic resin and thermoplastic elastomer in coating composition)

A coating composition according to the invention may be of an embodiment which contains both a thermoplastic resin and a thermoplastic elastomer, and in which a sea phase, which is a matrix phase containing the thermoplastic resin, and an island phase, which is a dispersed phase containing the thermoplastic elastomer. By forming the coating composition in the sea-island structure, in which the thermoplastic elastomer is dispersed in the matrix made of the thermoplastic resin, the pull-out resistance of a reinforcing metal cord member with respect to the coating composition can be improved.

The mass ratio (p/e) of a thermoplastic resin (p) to a thermoplastic elastomer (e) in the coating composition of the embodiment is preferably from 95/5 to 55/45 from a viewpoint of easy formation of the sea-island structure constituted with a sea phase containing the thermoplastic resin and an island phase containing the thermoplastic elastomer, more preferably from 90/10 to 60/40, and especially preferably from 85/15 to 70/30.

It is possible to confirm whether an island phase containing the thermoplastic elastomer is finely dispersed in a sea phase containing the thermoplastic resin by an observation of a photograph using a SEM (scanning electron microscope).

The size of an island phase containing the thermoplastic elastomer (the major diameter of an island phase) is from approximately 0.4 µm to 10.0 µm, more preferably from approximately 0.5 µm to 7 µm, and especially preferably from approximately 0.5 µm to 5 µm. The size of each phase can be measured by an observation of a photograph using a SEM (scanning electron microscope).

### [Adhesion layer]

At least a part of a reinforcing metal cord member according to the invention is coated with the coating composition via an adhesion layer. The adhesion layer contains a hot-melt adhesive.

A "hot-melt adhesive" means herein an adhesive, which contains a thermoplastic resin as a main component without containing an organic solvent, so that the solid content is 100%, and is solid or semisolid at normal temperature (room temperature), and melts by heating.

Further, "via an adhesion layer" means a state in which an adhesion layer is present at a part of or an entire space between a reinforcing metal cord member and the coating composition.

### (Hot-melt adhesive)

Adhesion with a hot-melt adhesive not containing an organic solvent as described above is implemented by melting the hot-melt adhesive and then solidifying it by cooling. Therefore, the hot-melt adhesive can be adhered tightly even to a rugged outer circumferential surface of a reinforcing metal cord member, so that a reinforcing metal cord member and the coating composition can be firmly fixed together. Accordingly, it is conceivable that by placing an adhesion layer containing the hot-melt adhesive between a reinforcing metal cord member and the coating composition, the reinforcing metal cord member and the coating composition can be firmly fixed together, and that the pull-out resistance of the reinforcing metal cord member with respect to the coating composition can be enhanced. Further, since the hot-melt adhesive does not contain an organic solvent, a solvent drying step is not necessary. It is superior to other adhesives from viewpoints of environment and production.

The hot-melt adhesive comprises at least one kind selected from a modified olefin-based resin (such as a modified polyethylene-base resin, and a modified polypropylene-base resin), an ethylene-ethyl acrylate copolymer, or an ethylene-vinyl acetate copolymer. Since the temperature of a tire may occasionally become high during use, the softening temperature of the thermoplastic resin as a main component is preferably above 100°C.

Examples of additional hot-melt adhesives that may also be present include those containing as a main component (base material) 1, or two or more kinds of thermoplastic resins from a polyamide-bases resin or a polyurethane-bases resin, a polyester-bases resin, A hot-melt adhesive containing a modified olefin-based resin (an acid-modified olefin-based resin) modified with an unsaturated carboxylic acid is more preferable, from a viewpoint of adhesiveness with the reinforcing metal cord member and the coating composition.

In this regard, a "modified olefin-based resin modified with an unsaturated carboxylic acid" means a modified olefin-based resin in which a polyolefin is graft-copolymerized with an unsaturated carboxylic acid.

According to the invention, the adhesion layer contains one or more kinds of hot-melt adhesive(s).

Examples of the unsaturated carboxylic acid include acrylic acid, methacrylic acid, maleic acid, fumaric acid, and itaconic acid.

Examples of the olefin-based resin include a polyethylene-based resin, a polypropylene-based resin, and a polybutadiene-based resin.

As the hot-melt adhesive in the invention, an adhesive containing as a main component (base material) at least one kind of thermoplastic resin selected from an acid-modified olefin-based resin, especially a maleic acid-modified polyethylene-based resin or a maleic acid-modified polypropylene-based resin is favorably used from a viewpoint of high resistance to an environmental change such as temperature and humidity, high adhesion with the reinforcing metal cord member and the coating composition, and superior pull-out resistance of the reinforcing metal cord member with respect to the coating composition.

The hot-melt adhesive may contain, in addition to the thermoplastic resin as a main component, an additive such as a tackifying resin, a softening agent (a plasticizer), an antioxidant (an anti-aging agent), or a heat stabilizer, if necessary.

There is no particular restriction on the average layer thickness of the adhesion layer in the invention. It is preferably from 5 µm to 200 µm, more preferably from 20 µm to 150 µm, and especially preferably from 20 µm to 100 µm, from viewpoints of easier formation of an adhesion layer, adhesiveness, and the like.

### [Resin material]

The tire frame according to the invention is composed of a resin material.

The "resin material" in the invention contains at least a resin (resin component) and may further contain another component such as an additive.

The "resin material" is herein a concept including a thermoplastic resin, a thermoplastic elastomer, and a thermosetting resin, but excluding a vulcanized rubber.

Examples of the thermosetting resin include a phenolic thermosetting resin, a urea-based thermosetting resin, a melamine-based thermosetting resin, and an epoxy-based thermosetting resin.

Examples of the thermoplastic resin include a polyamide-based thermoplastic resin, a polyester-based thermoplastic resin, an olefin-based thermoplastic resin, a polyurethane-based thermoplastic resin, a poly(vinyl chloride)-based thermoplastic resin, and a polystyrene-based thermoplastic resin. These may be used singly or in a combination of two or more kinds thereof. Among the thermoplastic resins, at least one kind selected from a polyamide-based thermoplastic resin, a polyester-based thermoplastic resin, or an olefin-based thermoplastic resin is preferable, and at least one kind selected from a polyamide-based thermoplastic resin or an olefin-based thermoplastic resin is more preferable.

Examples of the thermoplastic elastomer include a polyamide-based thermoplastic elastomer (TPA), a polystyrene-based thermoplastic elastomer (TPS), a polyurethane-based thermoplastic elastomer (TPU), an olefin-based thermoplastic elastomer (TPO), a polyester-based thermoplastic elastomer (TPEE), and a crosslinked thermoplastic rubber (TPV), as well as another type of thermoplastic elastomer (TPZ) as defined according to JIS K6418. As the resin material for forming the tire frame, use of the thermoplastic resin is preferable considering the elasticity required at traveling and formability in production, and use of the thermoplastic elastomer is more preferable. Further, use of the polyamide-based thermoplastic elastomer is especially preferable when a polyamide-based thermoplastic resin is used as the thermoplastic resin for coating the reinforcing metal cord member.

### - Polyamide-based thermoplastic elastomer -

The polyamide-based thermoplastic elastomer means a thermoplastic resin material composed of a copolymer having: a polymer which forms a hard segment which is crystalline and has a high melting temperature; and a polymer which forms a soft segment which is amorphous and has a low glass transition temperature, in which the polymer which forms a hard segment has an amide bond (-CONH-) in a main chain thereof.

Examples of the polyamide-based thermoplastic elastomer include a material in which at least a polyamide forms a crystalline hard segment with a high melting temperature, and another polymer (such as a polyester or a polyether) forms an amorphous soft segment with a low glass transition temperature. Further, the polyamide-based thermoplastic elastomer may be composed of, in addition to a hard segment and a soft segment, a chain extender such as a dicarboxylic acid.

Specific examples of the polyamide-based thermoplastic elastomer include an amide-based thermoplastic elastomer (TPA) as defined according to JIS K6418: 2007, and a polyamide-based elastomer described in JP-ANo. 2004-346273.

Examples of the polyamide forming the hard segment in the polyamide-based thermoplastic elastomer include a polyamide formed from a monomer expressed by the following Formula (1) or Formula (2).

Formula (1) H₂N-R¹-COOH

[In Formula (1), R¹ represents a hydrocarbon molecular chain having from 2 to 20 carbon atoms, or an alkylene group having from 2 to 20 carbon atoms.]

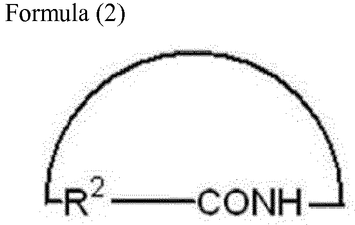

[In Formula (2), R² represents a hydrocarbon molecular chain having from 3 to 20 carbon atoms, or an alkylene group having from 3 to 20 carbon atoms.]

In Formula (1), R¹ is preferably a hydrocarbon molecular chain having from 3 to 18 carbon atoms or an alkylene group having from 3 to 18 carbon atoms, more preferably a hydrocarbon molecular chain having from 4 to 15 carbon atoms or an alkylene group having from 4 to 15 carbon atoms, and especially preferably a hydrocarbon molecular chain having from10 to 15 carbon atom, or an alkylene group having from 10 to 15 carbon atoms. Meanwhile, in Formula (2), R² is preferably a hydrocarbon molecular chain having from 3 to 18 carbon atoms or an alkylene group having from 3 to 18 carbon atoms, more preferably a hydrocarbon molecular chain having from 4 to 15 carbon atom, or an alkylene group having from 4 to 15 carbon atoms, and especially preferably a hydrocarbon molecular chain having from10 to 15 carbon atoms or an alkylene group having from 10 to 15 carbon atoms.

Examples of the monomer expressed by Formula (1) or Formula (2) include an ω-aminocarboxylic acid and a lactam. Further, examples of the polyamide which forms the hard segment include a polycondensate of an ω-aminocarboxylic acid, a polycondensate of a lactam, and a polycondensate of a diamine and a dicarboxylic acid.

Examples of the ω-aminocarboxylic acid include an aliphatic ω-aminocarboxylic acid having from 5 to 20 carbon atoms, such as 6-aminocaproic acid, 7-aminoheptanoic acid, 8-aminooctanoic acid, 10-aminocapric acid, 11-aminoundecanoic acid, and 12-aminododecanoic acid. Examples of the lactam include an aliphatic lactam having from 5 to 20 carbon atoms, such as lauryl lactam, ε-caprolactam, undecane lactam, ω-enantholactam, and 2-pyrrolidone.

Examples of the diamine include a diamine compound such as an aliphatic diamine having from 2 to 20 carbon atoms, including ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, 3-methylpentamethylenediamine, and *meta*-xylylenediamine.

The dicarboxylic acid can be expressed as HOOC-(R³)ₘ-COOH (R³: a hydrocarbon molecular chain having from 3 to 20 carbon atoms, m: 0 or 1), and examples thereof include an aliphatic dicarboxylic acid having from 2 to 20 carbon atoms, such as oxalic acid, succinic acid, glutaric acid, adipic acid, pimelic acid, suberic acid, azelaic acid, sebacic acid, and dodecanedioic acid.

As the polyamide forming the hard segment, a polyamide prepared by ring-opening polycondensation of lauryl lactam, ε-caprolactam, or undecane lactam can be favorably used.

Examples of the polymer which forms the soft segment include a polyester, and a polyether, and specifically, polyethylene glycol, polypropylene glycol, poly(tetramethylene ether) glycol, and an ABA-type triblock polyether. These may be used singly or in a combination of two or more kinds thereof. Further, a polyetherdiamine obtained by reacting ammonia or the like with the end of a polyether may be also used.

In this regard, the "ABA-type triblock polyether" means a polyether expressed by the following Formula (3).

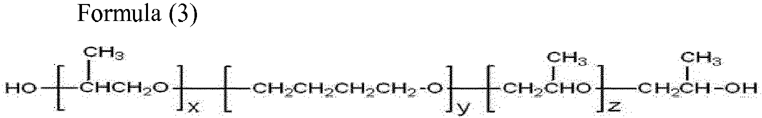

[In Formula (3), x and z each represent an integer from 1 to 20. y represents an integer from 4 to 50.]

In Formula (3), x and z are each preferably an integer from 1 to 18, more preferably an integer from 1 to 16, especially preferably an integer from 1 to 14, and most preferably an integer from1 to 12. Further, in Formula (3), y is preferably an integer from 5 to 45, more preferably an integer from 6 to 40, especially preferably an integer from 7 to 35, and most preferably an integer from 8 to 30.

Examples of a combination of the hard segment and the soft segment include the combinations of the respective hard segment and the respective soft segment described above. Among them, as the combination of the hard segment and the soft segment, a combination of a ring-opening polycondensate of lauryl lactam and poly(ethylene glycol), a combination of a ring-opening polycondensate of lauryl lactam and poly(propylene glycol), a combination of a ring-opening polycondensate of lauryl lactam and poly(tetramethylene ether) glycol, and a combination of a ring-opening polycondensate of lauryl lactam and an ABA-ype triblock polyether are preferable, and a combination of a ring-opening polycondensate of lauryl lactam and an ABA type triblock polyether is especially preferable.

The number average molecular weight of the polymer (polyamide) forming the hard segment is preferably from 300 to 15,000 from a viewpoint of melt-formability. Meanwhile, the number average molecular weight of the polymer forming the soft segment is preferably from 200 to 6,000 from viewpoints of toughness and low temperature flexibility. Further, the mass ratio (x/y) of the hard segment (x) to the soft segment (y) is preferably from 50/50 to 90/10, and more preferably from 50/50 to 80/20, from a viewpoint of formability.

The polyamide-based thermoplastic elastomer can be synthesized by copolymerizing the polymer for forming the hard segment and the polymer for forming the soft segment by a publicly known method.

As a commercial product for the polyamide-based thermoplastic elastomer, for example, "UBE STA XPA" series (for example, XPA9063X1, XPA9055X1, XPA9048X2, XPA9048X1, XPA9040X1, and XPA9040X2XPA9044) from UBE Industries, Ltd., "VESTAMID" series (for example, E40-S3, E47-S1, E47-S3, E55-S1, E55-S3, EX9200, and E50-R2), from Daicel-Evonik Ltd., or the like may be used.

Since the polyamide-based thermoplastic elastomer satisfies required performance for a tire frame from viewpoints of elastic modulus (flexibility), strength, and the like, it is suitable as a resin material. Further, the polyamide-based thermoplastic elastomer is in many cases superior also in adhesiveness with a thermoplastic resin or a thermoplastic elastomer. Therefore, when the polyamide-based thermoplastic elastomer is used as a resin material for forming the tire frame, the degree of freedom in a selection of a material for the coating composition tends to become high from a viewpoint of the adhesiveness between the tire frame and the coating composition.

### - Polystyrene-based thermoplastic elastomer -

Examples of the polystyrene-based thermoplastic elastomer include a material, in which at least polystyrene forms a hard segment, and another polymer (for example, polybutadiene, polyisoprene, polyethylene, hydrogenate polybutadiene, and hydrogenate polyisoprene) forms an amorphous soft segment with a low glass transition temperature. As the polystyrene which forms the hard segment, for example, one yielded by a publicly known method, such as a radical polymerization method or an ionic polymerization method, is favorably used, and one of specific examples is polystyrene having an anionic living polymer form. Examples of a polymer forming the soft segment include polybutadiene, polyisoprene, and poly(2,3-dimethylbutadiene).

Examples of a combination of the hard segment and the soft segment include the combinations of the respective hard segment and the respective soft segment described above. Among them, as the combination of the hard segment and the soft segment, a combination of polystyrene and polybutadiene, and a combination of polystyrene and polyisoprene is preferable. Further, the soft segment is preferably hydrogenated, so as to suppress unintended crosslinking of a thermoplastic elastomer.

The number average molecular weight of the polymer (polystyrene) forming the hard segment is preferably from 5,000 to 500,000, and more preferably from 10,000 to 200,000.

Meanwhile, the number average molecular weight of the polymer forming the soft segment is preferably from 5,000 to 1,000,000, more preferably from 10,000 to 800,000, and especially preferably from 30,000 to 500,000. Further, the volume ratio (x:y) of a hard segment (x) to a soft segment (y) is preferably from 5:95 to 80:20, and more preferably from 10/90 to 70/30, from a viewpoint of formability.

The polystyrene-based thermoplastic elastomer can be synthesized by copolymerizing the polymer for forming the hard segment and the polymer for forming the soft segment by a publicly known method.

Examples of the polystyrene-based thermoplastic elastomer include a styrene/butadiene-based copolymer [SBS (polystyrene-poly(butylene) block-polystyrene), SEBS (polystyrene-poly(ethylene/butylene) block-polystyrene)], a styrene-isoprene copolymer (polystyrene-polyisoprene block-polystyrene), a styrene/propylene-based copolymer [SEP (polystyrene-poly(ethylene/propylene) block), SEPS (polystyrene-poly(ethylene/propylene) block-polystyrene), SEEPS (polystyrene-poly(ethylene-ethylene/propylene) block-polystyrene), and SEB (polystyrene poly(ethylene /butylene) block)].

As a commercial product for the polystyrene-based thermoplastic elastomer, for example, "TUFTEC" series (for example, H1031, H1041, H1043, H1051, H1052, H1053, H1062, H1082, H1141, H1221, and H1272) produced by Asahi Kasei Corporation, and "SEBS" series (8007, 8076, *etc*.), "SEPS" series (2002, 2063, *etc*.), *etc.* produced by Kuraray Co., Ltd. may be used.

### - Polyurethane-based thermoplastic elastomer -

With respect to the polyurethane-based thermoplastic elastomer, for example, there is a material in which at least polyurethane forms a hard segment with pseudo-crosslinks formed by physical aggregation, and another polymer forms an amorphous soft segment with a low glass transition temperature.

Specific examples of the polyurethane-based thermoplastic elastomer include a polyurethane-based thermoplastic elastomer (TPU) as defined according to JIS K6418: 2007. A polyurethane-based thermoplastic elastomer can be expressed as a copolymer including a soft segment containing a unit structure expressed by the following Formula A, and a hard segment containing a unit structure expressed by the following Formula B.

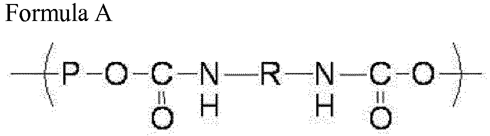

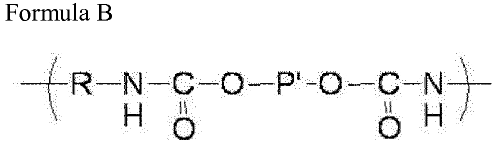

[In Formulas, P represents a long-chain aliphatic polyether or a long-chain aliphatic polyester. R represents an aliphatic hydrocarbon, an alicyclic hydrocarbon, or an aromatic hydrocarbon. P' represents a short chain aliphatic hydrocarbon, an alicyclic hydrocarbon, or an aromatic hydrocarbon.]

As the long-chain aliphatic polyether or the long-chain aliphatic polyester expressed by P in Formula A, for example, that with a molecular weight of from 500 to 5,000 may be used. P is originated from a diol compound containing a long-chain aliphatic polyether or a long-chain aliphatic polyester expressed as P. Examples of such a diol compound include polyethylene glycol, polypropylene glycol, poly(tetramethylene ether) glycol, poly(butylene adivate) diol, poly-ε-caprolactone diol, poly(hexamethylene carbonate) diol, and an ABA-type triblock polyether, molecular weight of which being within the above range.

These may be used singly or in a combination of two or more kinds thereof.

R in Formula A and Formula B is originated from a diisocyanate compound containing an aliphatic hydrocarbon, an alicyclic hydrocarbon, or an aromatic hydrocarbon expressed by R. Examples of the aliphatic diisocyanate compound containing an aliphatic hydrocarbon expressed by R include 1,2-ethylene diisocyanate, 1,3-propylene diisocyanate, 1,4-butane diisocyanate, and 1,6-hexamethylene diisocyanate.

Examples of the diisocyanate compound containing an alicyclic hydrocarbon expressed by R include 1,4-cyclohexane diisocyanate and 4,4-cyclohexane diisocyanate. Further, examples of the aromatic diisocyanate compound containing an aromatic hydrocarbon expressed by R include 4,4'-diphenyl methane diisocyanate and tolylene diisocyanate.

These may be used singly or in a combination of two or more kinds thereof.

As the short chain aliphatic hydrocarbon, the alicyclic hydrocarbon, or the aromatic hydrocarbon expressed by P' in Formula B, for example, that having a molecular weight of smaller than 500 may be used. P' is originated from a diol compound containing a short chain aliphatic hydrocarbon, an alicyclic hydrocarbon, or an aromatic hydrocarbon expressed by P'. Examples of the aliphatic diol compound containing a short chain aliphatic hydrocarbon expressed by P' include glycol, and a polyalkylene glycol, and specifically include ethylene glycol, propylene glycol, trimethylene glycol, 1,4-butanediol, 1,3-butanediol, 1,5-pentane diol, 1,6-hexane diol, 1,7-heptane diol, 1,8-octane diol, 1,9-nonane diol, and 1,10-decane diol.

Examples of the alicyclic diol compound containing an alicyclic hydrocarbon expressed by P' include cyclopentane-1,2-diol, cyclohexane-1,2-diol, cyclohexane-1,3-diol, cyclohexane-1,4-diol, and cyclohexane-1,4-dimethanol.

Further, examples of the aromatic diol compound containing an aromatic hydrocarbon expressed by P' include hydroquinone, resorcinol, chlorohydroquinone, bromohydroquinone, methylhydroquinone, phenylhydroquinone, methoxyhydroquinone, phenoxyhydroquinone, 4,4'-dihydroxybiphenyl, 4,4'-dihydroxydiphenyl ether, 4,4'-dihydroxydiphenyl sulfide, 4,4'-dihydroxydiphenyl sulfone, 4,4'-dihydroxybenzophenone, 4,4'-dihydroxydiphenyl methane, bisphenol A, 1,1-di(4-hydroxyphenyl)cyclohexane, 1,2-bis(4-hydroxyphenoxy)ethane, 1,4-dihydroxynaphthalene, and 2,6-dihydroxynaphthalene.

These may be used singly or in a combination of two or more kinds thereof.

The number average molecular weight of the polymer (polyurethane) forming the hard segment is preferably from 300 to 1,500 from a viewpoint of melt-formability. Meanwhile, the number average molecular weight of the polymer (polyurethane) forming the soft segment is preferably from 500 to 20,000, more preferably from 500 to 5,000, and especially preferably from 500 to 3,000, from viewpoints of the flexibility and thermal stability of a polyurethane-based thermoplastic elastomer. Further, the mass ratio (x:y) of a hard segment (x) to a soft segment (y) is preferably from 15:85 to 90:10, and more preferably from 30:70 to 90:10, from a viewpoint of formability.

The polyurethane-based thermoplastic elastomer can be synthesized by copolymerizing the polymer for forming the hard segment and the polymer for forming the soft segment by a publicly known method. As the polyurethane-based thermoplastic elastomer, for example, a thermoplastic polyurethane described in JP-A No. H05-331256 can be used.

As the polyurethane-based thermoplastic elastomer, specifically, a combination of a hard segment composed of an aromatic diol and an aromatic diisocyanate and a soft segment composed of a polycarbonate ester is preferable, and more specifically at least one kind selected from a tolylene diisocyanate (TDI) / polyester-based polyol copolymer, a TDI / polyether-based polyol copolymer, a TDI / caprolactone-based polyol copolymer, a TDI / polycarbonate-based polyol copolymer, a 4,4'-diphenyl methane diisocyanate (MDI) / polyester-based polyol copolymer, a MDI / polyether-based polyol copolymer, a MDI / caprolactone-based polyol copolymer, a MDI / polycarbonate-based polyol copolymer, or a MDI+hydroquinone / poly(hexamethylene carbonate) copolymer is preferable, and at least one kind selected from a TDI / polyester-based polyol copolymer, a TDI / polyether-based polyol copolymer, a MDI / polyester polyol copolymer, a MDI / polyether-based polyol copolymer, or a MDI+hydroquinone / poly(hexamethylene carbonate) copolymer is more preferable.

As a commercial product for the polyurethane-based thermoplastic elastomer, for example, "ELASTOLLAN" series (for example, ET680, ET880, ET690, and ET890) produced by BASF SE, "KURAMILON U" series (for example, 2000s, 3000s, 8000s, and 9000s) produced by Kuraray Co., Ltd., and "MIRACTRAN" series (for example, XN-2001, XN-2004, P390RSUP, P480RSUI, P26MRNAT, E490, E590, and P890) produced by Nippon Miractran Co., Ltd. may be used.

### - Olefin-based thermoplastic elastomer -

Examples of the olefin-based thermoplastic elastomer include a material in which at least a polyolefin forms a crystalline hard segment with a high melting temperature, and another polymer (for example, polyolefin, another polyolefin, and polyvinyl compound) forms an amorphous soft segment with a low glass transition temperature. Examples of the polyolefin forming a hard segment include polyethylene, polypropylene, isotactic polypropylene, and polybutene.

Examples of the olefin-based thermoplastic elastomer include an olefin-α-olefin random copolymer and an olefin block copolymer, and specifically include a propylene block copolymer, an ethylene-propylene copolymer, a propylene-1-hexene copolymer, a propylene-4-methyl-1-pentene copolymer, a propylene-1-butene copolymer, an ethylene-1-hexene copolymer, an ethylene-4-methylpentene copolymer, an ethylene-1-butene copolymer, a 1-butene-1-hexene copolymer, 1-butene-4-methylpentene, an ethylene-methacrylic acid copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, an ethylene-butyl acrylate copolymer, a propylene-methacrylic acid copolymer, a propylene-methyl methacrylate copolymer, a propylene-ethyl methacrylate copolymer, a propylene- butyl methacrylate copolymer, a propylene-methyl acrylate copolymer, a propylene-ethyl acrylate copolymer, a propylene-butyl acrylate copolymer, an ethylene-vinyl acetate copolymer, and a propylene-vinyl acetate copolymer.

Among them, as the olefin-based thermoplastic elastomer, at least one kind selected from a propylene block copolymer, an ethylene-propylene copolymer, a propylene-1-hexene copolymer, a propylene-4-methyl-1-pentene copolymer, a propylene-1-butene copolymer, an ethylene-1-hexene copolymer, an ethylene-4-methylpentene copolymer, an ethylene-1-butene copolymer, an ethylene-methacrylic acid copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, an ethylene-butyl acrylate copolymer, a propylene-methacrylic acid copolymer, a propylene-methyl methacrylate copolymer, a propylene-ethyl methacrylate copolymer, a propylene-butyl methacrylate copolymer, a propylene-methyl acrylate copolymer, a propylene-ethyl acrylate copolymer, a propylene-butyl acrylate copolymer, an ethylene-vinyl acetate copolymer, or a propylene-vinyl acetate copolymer is preferable, and at least one kind selected from an ethylene-propylene copolymer, a propylene-1-butene copolymer, an ethylene-1-butene copolymer, an ethylene-methyl methacrylate copolymer, an ethylene-methyl acrylate copolymer, an ethylene-ethyl acrylate copolymer, or an ethylene-butyl acrylate copolymer is more preferable.

A combination of two or more kinds of the olefin-based resins, such as ethylene and propylene may be used. The content of an olefin-based resin in an olefin-based thermoplastic elastomer is preferably from 50 mass-% to 100 mass-%.

The number average molecular weight of the olefin-based thermoplastic elastomer is preferably from 5,000 to 10,000,000. When the number average molecular weight of the olefin-based thermoplastic elastomer is from 5,000 to 10,000,000, the mechanical properties of a thermoplastic resin material can be adequate, and processability thereof is also superior. From a similar viewpoint, the number average molecular weight of an olefin-based thermoplastic elastomer is more preferably from 7,000 to 1,000,000, and especially preferably from 10,000 to 1,000,000. In this case, the mechanical properties and processability of the thermoplastic resin material can be improved. Meanwhile, the number average molecular weight of the polymer forming the soft segment is preferably from 200 to 6,000 from viewpoints of toughness and low temperature flexibility. Further, the mass ratio (x:y) of a hard segment (x) to a soft segment (y) is preferably from 50:50 to 95:5, and more preferably from 50:50 to 90:10, from a viewpoint of formability.

An olefin-based thermoplastic elastomer can be synthesized through copolymerization by a publicly known method.

As the olefin-based thermoplastic elastomer, a thermoplastic elastomer which has been acid-modified may be used.

The "olefin-based thermoplastic elastomer which has been acid-modified" means an olefin-based thermoplastic elastomer which has been bonded with an unsaturated compound having an acidic group, such as a carboxylic acid group, a sulfate group, or a phosphate group.

For bonding the unsaturated compound having an acidic group, such as a carboxylic acid group, a sulfate group, or a phosphate group to the olefin-based thermoplastic elastomer, for example, an unsaturated bond site of an unsaturated carboxylic acid (generally maleic anhydride) as an unsaturated compound having an acidic group is bonded (for example, grafted) to an olefin-based thermoplastic elastomer.

As the unsaturated compound having an acidic group, an unsaturated compound having a carboxylic acid group, which is a weak acidic group, is preferable from a viewpoint of suppression of deterioration of the olefin-based thermoplastic elastomer, and examples thereof include acrylic acid, methacrylic acid, itaconic acid, crotonic acid, isocrotonic acid, and maleic acid.

As a commercial product for the olefin-based thermoplastic elastomer, for example, "TAFMER" series (for example, A0550S, A1050S, A4050S, A1070S, A4070S, A35070S, A1085S, A4085S, A7090, A70090, MH7007, MH7010, XM-7070, XM-7080, BL4000, BL2481, BL3110, BL3450, P-0275, P-0375, P-0775, P-0180, P-0280, P-0480, and P-0680) produced by Mitsui Chemicals, Inc., "NUCREL" series (for example, AN4214C, AN4225C, AN42115C, N0903HC, N0908C, AN42012C, N410, N1050H, N1108C, N1110H, N1207C, N1214, AN4221C, N1525, N1560, N0200H, AN4228C, AN4213C, and N035C), and "ELVALOY AC" series (for example, 1125AC, 1209AC, 1218AC, 1609AC, 1820AC, 1913AC, 2112AC, 2116AC, 2615AC, 2715AC, 3117AC, 3427AC, and 3717AC), produced by Dupont-Mitsui Polychemicals Co., Ltd., "ACRYFT" series, "EVATATE" series, *etc.* from Sumitomo Chemical Co., Ltd., "ULTRATHENE" series, *etc.* produced by Tosoh Corporation, "PRIME TPO" series (for example, E-2900H, F-3900H, E-2900, F-3900, J-5900, E-2910, F-3910, J-5910, E-2710, F-3710, J-5910, E-2740, F-3740, R110MP, R110E, T310E, and M142E) produced by Prime Polymer Co., Ltd., *etc.* may be used.

### - Polyester-based thermoplastic elastomer -

Examples of the polyester-based thermoplastic elastomer include a material in which at least a polyester forms a crystalline hard segment with a high melting temperature, and another polymer (for example, polyester, or polyether) forms an amorphous soft segment with a low glass transition temperature.

As the polyester forming the hard segment, an aromatic polyester can be used. The aromatic polyester can be formed, for example, from an aromatic dicarboxylic acid, or an ester-forming derivative thereof, and an aliphatic diol. The aromatic polyester is preferably a poly(butylene terephthalate) derived from terephthalic acid and/or dimethyl terephthalate, and 1,4-butanediol, and further may be a polyester derived from a dicarboxylic acid component and a diol with a molecular weight of 300 or less, examples of the dicarboxylic acid component of which including isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, and an ester-forming derivative thereof, and examples of the dicarboxylic acid component of which including an aliphatic diol such as ethylene glycol, trimethylene glycol, penta methylene glycol, hexamethylene glycol, neopentyl glycol, or decamethylene glycol, an alicyclic diol such as 1,4-cyclohexane dimethanol, or tricyclodecane dimethylol, and an aromatic diol such as xylylene glycol, bis(*p*-hydroxy)diphenyl, bis(*p*-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-*p*-terphenyl, or 4,4'-dihydroxy-p-quaterphenyl; or a copolyester combining two or more kinds of the dicarboxylic acid components and the diol components. Further, it is possible to copolymerize a multifunctional carboxylic acid component, a multifunctional hydroxy acid component, a multifunctional hydroxy component, and the like with three or more functional groups in a range of 5 mol-% or less.

Examples of the polyester forming the hard segment include poly(ethylene terephthalate), poly(butylene terephthalate), poly(methylene terephthalate), poly(ethylene naphthalate), and poly(butylene naphthalate), and poly(butylene terephthalate) is preferable.

Examples of the polymer forming the soft segment include, an aliphatic polyester and an aliphatic polyether.

Examples of the aliphatic polyether include poly(ethylene oxide) glycol, poly(propylene oxide) glycol, poly(tetramethylene oxide) glycol, poly(hexamethylene oxide) glycol, a copolymer of ethylene oxide and propylene oxide, an ethylene oxide addition polymer of poly(propylene oxide) glycol, and a copolymer of ethylene oxide and tetrahydrofuran.

Examples of the aliphatic polyester include poly(ε-caprolactone), polyenantholactone, polycaprylolactone, poly(butylene adipate), and poly(ethylene adipate).

Among the aliphatic polyethers and the aliphatic polyesters, as the polymer forming the soft segment, poly(tetramethylene oxide) glycol, an ethylene oxide addition product of poly(propylene oxide) glycol, poly(ε-caprolactone), poly(butylene adipate), and poly(ethylene adipate), and the like are preferable from a viewpoint of the elasticity characteristic of an obtained polyester block copolymer.

The number average molecular weight of the polymer forming the soft segment is preferably from 300 to 6,000 from viewpoints of toughness and low temperature flexibility. Further, the mass ratio (x:y) of a hard segment (x) to a soft segment (y) is preferably from 99:1 to 20:80 from a viewpoint of formability, and more preferably from 98:2 to 30:70.

Examples of a combination of the hard segment and the soft segment include the combinations of the respective hard segment and the respective soft segment described above. Among them, as the combination of the hard segment and the soft segment a combination of poly(butylene terephthalate) as a hard segment and an aliphatic polyether as a soft segment is preferable, and a combination of poly(butylene terephthalate) as a hard segment and poly(ethylene oxide) glycol as a soft segment is more preferable.

As a commercial product for the polyester-based thermoplastic elastomer, for example, "HYTREL" series (for example, 3046, 5557, 6347, 4047, and 4767) from Du Pont-Toray Co., Ltd., and "PELPRENE" series (for example, P30B, P40B, P40H, P55B, P70B, P150B, P280B, P450B, P150M, S1001, S2001, S5001, S6001, and S9001) produced by Toyobo Co., Ltd. may be used.

The polyester-based thermoplastic elastomer can be synthesized by copolymerizing the polymer for forming the hard segment and the polymer for forming the soft segment by a publicly known method.

Although the melting temperature of the resin material is ordinarily from approximately 100°C to 350°C, from viewpoints of the durability and productivity of a tire it is preferably from approximately 100°C to 250°C, and more preferably from 100°C to 200°C.

The resin material may, if necessary, contain (be blended with) various additives, such as a rubber, an elastomer, a thermoplastic resin, various fillers (for example, silica, calcium carbonate, and clay), an anti-aging agent, an oil, a plasticizer, a colorant, or a weather resistant agent.

The tensile modulus as set forth in JIS K7113: 1995 of the resin material (tire frame) itself is preferably from 50 MPa to 1,000 MPa, more preferably from 50 MPa to 800 MPa, and especially preferably from 50 MPa to 700 MPa. When the tensile modulus of the resin material is from 50 MPa to 1,000 MPa, fitting thereof onto a rim can be performed efficiently, while the shape of the tire frame is maintained.

The tensile strength as set forth in JIS K7113: 1995 of the resin material (tire frame) itself is ordinarily from approximately 15 MPa to 70 MPa, preferably from 17 MPa to 60 MPa, and more preferably from 20 MPa to 55 MPa.

The tensile yield strength as set forth in JIS K7113: 1995 of the resin material (tire frame) itself is preferably 5 MPa or more, more preferably from 5 MPa to 20 MPa, and especially preferably from 5 MPa to 17 MPa. When the tensile yield strength of the resin material is 5 MPa or more, the tire can be resistant to deformation by a load applied thereto at traveling and the like.

The tensile yield elongation as set forth in JIS K7113: 1995 of the resin material (tire frame) itself is preferably 10% or more, more preferably from 10% to 70%, and especially preferably from 15% to 60%. When the tensile yield elongation of the resin material is 10% or more, the elastic region can be broad and the fittability thereof onto a rim can be high.

The tensile elongation at break as set forth in JIS K7113: 1995 of the resin material (tire frame) itself is preferably 50% or more, more preferably 100% or more, especially preferably 150% or more, and most preferably 200% or more. When the ensile elongation at break of the resin material is 50% or more, the rim fittability is favorable, and the crash resistance at collision can be high.

The deflection temperature under load (at a load of 0.45 MPa) as set forth in ISO 75-2 or ASTM D648 of the resin material (tire frame) itself is preferably 50°C or more, more preferably from 50°C to 150°C, and especially preferably from 50°C to 130°C. When the deflection temperature under load of the resin material is 50°C or more, deformation of the tire frame can be suppressed, even in a case in which vulcanization is performed in production of a tire.

With respect to a tire according to the invention, the Martens hardness of the tire frame (d1), the Martens hardness of a coating composition (d2), and the Martens hardness of an adhesion layer (d3) preferably satisfy the relationship d1 ≤ d2 < d3. When the Martens hardness of the coating composition is set lower than the Martens hardness of an adhesion layer and higher than or equal to the Martens hardness of thea tire frame, a stiffness difference between the resin material composing the tire frame and the reinforcing metal cord member can be mitigated. As the result, the durability of the tire can be improved.

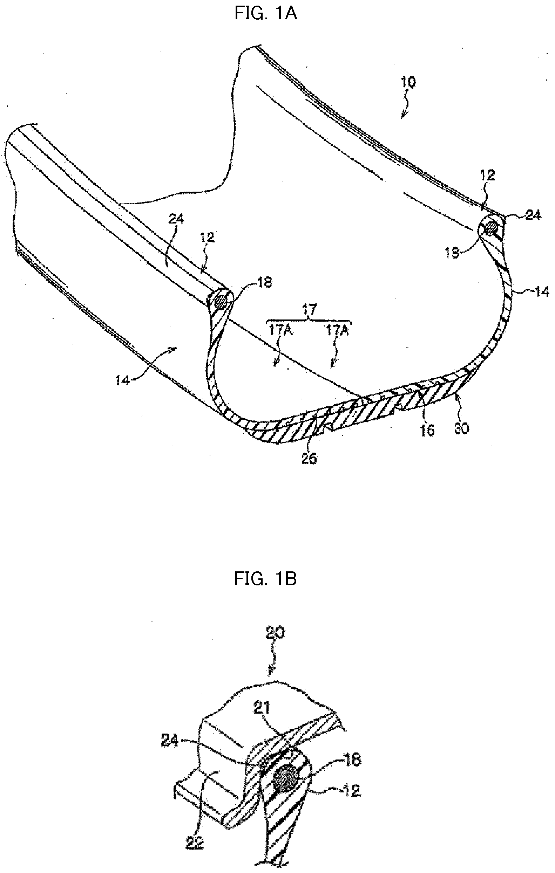

Hereinafter, the tire according to embodiments of the invention will be described with reference to the accompanying drawings. Note that each drawing described below (FIG. 1A, FIG. 1B, FIG. 2, FIG. 3, and FIG. 4) are schematic, and sizes and shapes of components are illustrated figuratively as appropriate in order to facilitate understanding.

### [First Embodiment]

First, a tire 10 according to a first embodiment of the invention will be explained with reference to FIG. 1A and FIG. 1B. FIG. 1A is a perspective view illustrating a cross-section of a portion of the tire according to the first embodiment of the invention. FIG. 1B is a cross-sectional view of a bead portion that has been fitted onto a rim. As illustrated in FIG. 1A, the tire 10 according to the first embodiment has a cross-sectional shape substantially similar to cross-sectional shapes of ordinary conventional rubber-made pneumatic tires.

The tire 10 according to the first embodiment of the invention includes a tire case 17 including a pair of bead portions 12 each of which is in contact with a bead seat 21 and a rim flange 22 of a rim 20, side portions 14 that respectively extend tire radial direction outward from the bead portions 12, and a crown portion 16 that connects a tire radial direction outer end of one of the side portions 14 with a tire radial direction outer end of the other side portion 14. The tire case 17 is formed using a resin material including a polyamide-based thermoplastic elastomer.

In the tire 10 according to the first embodiment of the invention, the tire case 17 is formed by configuring identical annular tire case half parts 17A (tire frame pieces) in which one of the bead portions 12, one of the side portions 14, and the half-width crown portion 16 are integrally injection molded to be aligned to face each other and to be bonded to each other at a tire equatorial plane portion.

In each bead portion 12 of the tire 10 according to the first embodiment of the invention, an annular bead core 18 made of a steel cord is embedded in a manner similar to ordinary conventional pneumatic tires. At a portion of each bead portion 12 in contact with the rim 20, and at least at a portion of each bead portion 12 in contact with the rim flange 22 of the rim 20, an annular sealing layer 24 made of a rubber that is a material having a sealing property superior to that of the resin material forming the tire case 17 is formed.

On the crown portion 16 of the tire 10 according to the first embodiment of the invention, a resin-covered cord 26, which is a reinforcing cord, is wound in a helical shape in a circumferential direction of the tire case 17 such that at least a portion thereof is embedded in the crown portion 16 in a cross-sectional view taken along an axial direction of the tire case 17. At a tire radial direction outer circumferential side of the resin-covered cord 26, a tread 30 made of a rubber that is a material having abrasion resistance superior to that of the resin material forming the tire case 17 is disposed. The resin-covered cord 26 will be described in detail below.

According to the tire 10 according to the first embodiment of the invention, the tire case 17 is formed of the resin material. Therefore, in contrast to conventional cases in which a tire case is formed of a rubber, vulcanization is unnecessary, thereby enabling manufacturing processes to be greatly simplified and enabling molding time to be reduced. According to the tire 10 according to the first embodiment of the invention, the tire case half parts 17A are each formed in a left-right symmetrical shape, in other words, one of the tire case half parts 17A is formed in the same shape as the other of the tire case half parts 17A. Therefore, there is an advantage that one type of mold suffices for molding the tire case half parts 17A.

In the tire 10 according to the first embodiment of the invention, the tire case 17 is formed with a single resin material. However, the invention is not limited to such an embodiment, and similarly to ordinary conventional rubber-made pneumatic tires, resin materials having characteristics different with respect to each of components of the tire case 17 (such as the side portions 14, the crown portion 16 and the bead portions 12) may be employed. The tire case 17 may be reinforced by a reinforcing material by embedding the reinforcing material (such as fibers, cord, nonwoven fabric, or woven fabric of a polymer material or metal) in each of the components of the tire case 17 (for example, in the bead portions 12, the side portions 14, the crown portion 16, and the like).

In the tire 10 according to the first embodiment of the invention, the tire case half parts 17A are each molded by injection molding. However, the invention is not limited thereto, and the tire case half parts may be molded, for example, by vacuum molding, pressure molding, injection molding, melt casting, or the like. In the tire 10 according to the first embodiment of the invention, the tire case 17 is formed by bonding two members (the tire case half parts 17A) to each other. However, the invention is not limited thereto, and the tire case may be formed as one member by a melted core method using a low melting temperature metal, a split core method, or a blow molding, and may be formed by bonding three or more members to each other.

In each bead portion 12 of the tire 10 according to the first embodiment of the invention, the annular bead core 18 made of a steel cord is embedded. The bead cores 18 may also be formed of, other than steel cord, for example, organic fiber cord, organic fiber cord covered with a resin, or a hard resin. Note that the bead cores 18 may be omitted as long as the rigidity of the bead portions 12 is assured and there is no problem in fitting onto the rim 20.

In the tire 10 according to the first embodiment of the invention, an annular sealing layer 24 made of a rubber is formed at a portion of each bead portion 12 in contact with the rim 20 and at least at a portion of each bead portion 12 in contact with the rim flange 22 of the rim 20. The seal layers 24 may also be formed at portions where the tire case 17 (the bead portions 12) and the bead seats 21 are in contact with each other. In a case in which a rubber is employed as a material for forming the seal layers 24, the rubber is preferably of the same type as the rubber employed on bead portion outer surfaces of ordinary conventional rubber-made pneumatic tires. Note that the rubber seal layers 24 may also be omitted as long as a sealing property relative to the rim 20 can be assured only with the resin material forming the tire case 17.

Further, the seal layers 24 may also be formed using other thermoplastic resin or thermoplastic elastomer having a sealing property superior to that of the resin material forming the tire case 17. Examples of such other thermoplastic resins include resins such as polyurethane-based resins, polyolefin-based resins, polystyrene-based resins, polyester resins, and blends of these resins with a rubber or elastomer. A thermoplastic elastomer may also be employed, and examples include polyester-based thermoplastic elastomers, polyurethane-based thermoplastic elastomers, polystyrene-based thermoplastic elastomers, polyolefin-based thermoplastic elastomers, a combination of such elastomers with each other, and a blend thereof with a rubber.

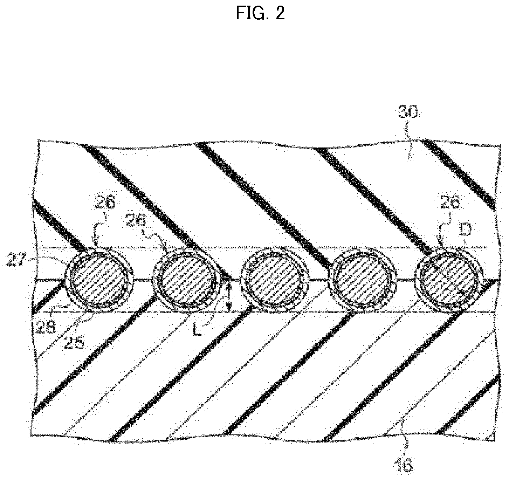

Next, the resin-covered cord 26 will be described with reference to FIG. 2. FIG. 2 is a cross-sectional view taken along a tire rotation axis of the tire according to the first embodiment of the invention and illustrating a state in which the resin-covered cord is embedded in the crown portion of the tire case.

As illustrated in FIG. 2, in the tire 10 according to the first embodiment of the invention, the resin-covered cord 26 is wound in a helical shape such that at least a portion thereof is embedded in the crown portion 16 in a cross-sectional view taken along the axial direction of the tire case 17. The portion of the reinforcing cord 26 embedded in the crown portion 16 is in close contact with the resin material forming the crown portion 16 (the tire case 17). The L in FIG. 2 refers to a depth of embedding the resin-covered cord 26 with respect to the crown portion 16 (the tire case 17) along a tire rotation axis direction. The embedding depth L of the resin-covered cord 26 with respect to the crown portion 16 is 1/2 of a diameter D of the resin-covered cord 26.

In the tire 10 according to the first embodiment of the invention, the resin-covered cord 26 has a structure in which, an outer circumference of the steel cord 27 having a steel cord (a reinforcing metal cord member) 27 of twisted steel fibers acting as a core is covered with a covering composition, via an adhesion layer 25 including a hot melt adhesive including an acid-modified olefin-based resin, that includes a polyamide-based thermoplastic elastomer. At the tire radial direction outer circumferential side of the resin-covered cord 26, the rubber-made tread 30 is disposed. A tread pattern of plural grooves is formed in a road surface contact surface of the tread 30, similarly to conventional rubber-made pneumatic tires.

In the tire 10 according to the first embodiment of the invention, the resin-covered cord 26 is configured such that the entirety of the outer circumference of the steel cord 27, that is formed of twisted steel fibers, is covered by, via the adhesion layer 25 including a hot melt adhesive including an acid-modified olefin-based resin, the covering composition that includes a polyamide-based thermoplastic elastomer. The resin-covered cord 26 is embedded in the tire case 17 formed of the resin material including a polyamide-based thermoplastic elastomer of the same type while being in close contact therewith. Accordingly, the contact area between the covering composition 28, that covers the steel cord 27, and the tire case 17 increases, and the adhesion durability between the resin-covered cord 26 and the tire case 17 is improved so that the durability of the tire becomes excellent.

While the embedding depth L of the resin-covered cord 26 with respect to the crown portion 16 is 1/2 of a diameter D of the resin-covered cord 26 in the tire 10 according to the first embodiment of the invention,the embedding depth L of the resin-covered cord 26 is preferably 1/5 or more, and particularly preferably above 1/2 of the diameter D of the resin-covered cord 26. Further, it is most preferable that the entirety of the resin-covered cord 26 is embedded in the crown portion 16. In a case in which the embedding depth L of the resin-covered cord 26 is above 1/2 of the diameter D of the resin-covered cord 26, the resin-covered cord 26 becomes unlikely to protrude from an embedded portion in view of the size of the resin-covered cord 26. Embedding the entirety of the resin-covered cord 26 in the crown portion 16 makes a surface (outer circumferential surface) to be flat, and suppresses incorporation of air in a peripheral portion of the resin-covered cord 26 even in a case in which any member is placed on the crown portion 16 in which the reinforcing cord 26 is embedded.

A layer thickness of the covering composition 28 that covers the steel cord 27 is not particularly limited, and an average layer thickness may be preferably from 0.2 mm to 4.0 mm, more preferably from 0.5 mm to 3.0 mm, and particularly preferably from 0.5 mm to 2.0 mm.

While the tread 30 is formed of a rubber in the tire 10 according to the first embodiment of the invention, a tread may be employed that is formed of, in place of a rubber, another kind of thermoplastic resin material superior to the resin material forming the tire case 17 in terms of abrasion resistance.

Hereinafter, a method of manufacturing the tire according to the first embodiment of the invention will be described.

### [Tire Case Forming Process]

First, tire case half parts supported by thin metal support rings are aligned to face each other. Then, a jointing mold is placed in such a manner as to be in contact with outer circumferential surfaces of abutting portions of the tire case half part. The jointing mold is configured to press the periphery of bonding sections (abutting portions) of the tire case half parts at a predetermined pressure (unillustrated). Then, the periphery of the bonding sections of the tire case half parts is pressed at a melting temperature (or softening temperature) or higher of a thermoplastic resin material (polyamide-based thermoplastic elastomer in the present embodiment) that forms the tire case. The bonding sections of the tire case half parts are heated and pressed by the jointing mold so that the bonding sections are melted, the tire case half parts are welded together, and these members are integrally formed into the tire case 17.

### [Resin-covered cord Forming Process]

Next, a resin-covered cord forming process will be described. A steel cord 27 is unwound from a reel, and a surface thereof is cleaned. Subsequently, an outer circumference of the steel cord is covered by a hot melt adhesive (a hot melt adhesive including an acid-modified olefin-based resin in the present embodiment,) extruded from an extruder. Then, the outer circumference of the steel cord on which an adhesive layer has been formed is covered by a covering composition (a polyamide-based thermoplastic elastomer in the present embodiment) extruded from an extruder, and thus, the resin-covered cord 26 is formed in which the outer circumference of the steel cord 27 is covered with the covering composition 28 through the adhesion layer including the hot melt adhesive. Then, the formed resin-covered cord 26 is wound on a reel 58.

### [Resin-covered cord Winding Process]

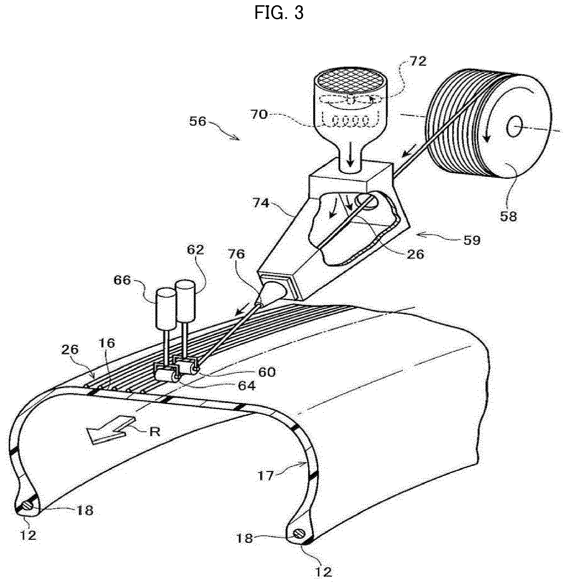

Next, a resin-covered cord winding process will be described with reference to FIG. 3. FIG. 3 is an explanatory diagram for describing an operation that provides the resin-covered cord in the crown portion of the tire case using a resin-covered cord heating device and rollers. In FIG. 3, a resin-covered cord feeding apparatus 56 includes the reel 58 on which the resin-covered cord 26 is wound, the resin-covered cord heating device 59 disposed at a cord conveying direction downstream side of the reel 58, a first roller 60 disposed at a resin-covered cord 26 conveying direction downstream side, a first cylinder device 62 that moves the first roller 60 in a direction towards, or away from, a tire outer circumferential surface, a second roller 64 disposed at the resin-covered cord 26 conveying direction downstream side of the first roller 60, and a second cylinder device 66 that moves the second roller 64 in a direction towards, or away from, the tire outer circumferential surface. The second roller 64 may be employed as a cooling roller made of metal. A surface of the first roller 60 or the second roller 64 is coated with a fluorine resin (TEFLON (registered trademark) in the present embodiment) to suppress adhesion of the melted or softened resin material. Thereby, the heated resin-covered cord is firmly integrated with a resin of the case.

The resin-covered cord heating device 59 includes a heater 70 and a fan 72 for generating hot air. The resin-covered cord heating device 59 also includes a heating box 74 to the interior of which hot air is supplied and through an interior space of which the resin-covered cord 26 passes, and a discharge outlet 76 that discharges the heated resin-covered cord 26.

In the present process, first, the temperature of the heater 70 in the resin-covered cord heating device 59 is raised, and surrounding air heated by the heater 70 is delivered to a heating box 74 by the air generated by rotation of the fan 72. Then, the resin-covered cord 26 unwound from the reel 58 is fed into the heating box 74, the interior space of which has been heated by the hot air, and heated (for example, the temperature of the resin-covered cord 26 is heated to from approximately 100°C to approximately 250°C). The heated resin-covered cord 26 passes through the discharge outlet 76, and is wound under a constant tension in a helical shape on the outer circumferential surface of the crown portion 16 of the tire case 17 rotating in the arrow R direction in FIG. 3. When a covering resin of the heated resin-covered cord 26 contacts the outer circumferential surface of the crown portion 16, the resin material of a contact portion melts or softens, and is melt-bonded to a tire case resin and integrated with the outer circumferential surface of the crown portion 16. In this case, the resin-covered cord is melted and bonded also to the resin-covered cord adjacent thereto so that winding is performed while no gap is present. Thereby, incorporation of air in a portion in which the resin-covered cord 26 is embedded can be suppressed.

The embedding depth L of the resin-covered cord 26 can be adjusted using a heating temperature of the resin-covered cord 26, a tension acting on the resin-covered cord 26, a pressure of the first roller 60, and the like. In the present embodiment, the embedding depth L of the resin-covered cord 26 is set to be 1/5 or greater of the diameter D of the resin-covered cord 26.

Then, a vulcanized, belt-shaped tread 30 is wound by a single turn on an outer circumferential surface of the tire case 17, and the tread 30 is bonded to the outer circumferential surface of the tire case 17 using a bonding agent or the like. Note that the tread 30 may be, for example, a pre-cured tread employed in conventionally-known recycled tires. The present process is similar to a process for bonding a pre-cured tread to an outer circumferential surface of a base tire of a recycled tire.

Then, bonding the seal layers 24 made of a vulcanized rubber to the bead portions 12 of the tire case 17 using a bonding agent or the like thereby completes the tire 10.

### (Effects)

In the tire 10 of the first embodiment of the invention, the resin-covered cord 26 is wound on the outer circumferential surface of the tire case 17 formed of a polyamide-based thermoplastic elastomer, in which the resin-covered cord 26 has the steel cord 27 as a core and is covered by, via the adhesion layer 25 including a hot melt adhesive including an acid-modified olefin-based resin, the covering composition 28 that includes a polyamide-based thermoplastic elastomer.

Since the thermoplastic resin included in the covering composition 28 is a polyamide-based elastomer of the same type as the resin material forming the tire case 17, an adhesion property between the covering composition 28 and the tire case 17 is high. The hot melt adhesive which includes an acid-modified olefin-based resin and which is included in the adhesion layer 25 has a high adhesion property with respect to the steel cord 27 and the covering composition 28 including a polyamide-based thermoplastic elastomer. When the resin-covered cord 26 is covered with the covering composition 28 including a polyamide-based thermoplastic elastomer of the same type as the resin material forming the tire case 17 in this manner, a difference in hardness between the resin-covered cord 26 and the tire case becomes smaller in comparison with a case in which a resin material of a different type is employed. Accordingly, the resin-covered cord 26 can be sufficiently adhered and fixed to the tire case 17.

In the tire 10 of the first embodiment of the invention, the steel cord 27 is not directly covered with the covering composition 28 including a polyamide-based thermoplastic elastomer, but the adhesion layer 25, which includes a hot melt adhesive which includes an acid-modified olefin-based resin and which exhibits a high adhesion property relative to both the steel cord 27 and the covering composition 28, is interposed therebetween. Accordingly, the steel cord 27 exhibits excellent pull-out resistance with respect to the covering composition 28. As a result, remaining of air bubbles can be effectively suppressed during tire manufacture, and movement of the reinforcing metal cord member during running can be effectively suppressed.

In the tire 10 of the first embodiment of the invention, the resin-covered cord 26 having a higher rigidity than that of the resin material is circumferentially wound in a helical shape on the outer circumferential surface of the crown portion 16 of the tire case 17 formed of the resin material. Therefore, a puncture resistance performance, a cut resistance performance, and a circumferential direction rigidity of the tire 10 are improved. In a case in which the circumferential direction rigidity of the tire 10 is improved, creep of the tire case 17 formed of the thermoplastic resin material is suppressed.

In the tire 10 of the first embodiment of the invention, at least a portion of the resin-covered cord 26 is embedded in the outer circumferential surface of the crown portion 16 of the tire case 17 formed of the resin material in a cross-sectional view taken along the axial direction of the tire case 17 (the cross-section illustrated in FIG. 1) while being in close contact with the resin material. Therefore, incorporation of air during manufacture is suppressed, and movement of the resin-covered cord 26 due to force input during running or the like is suppressed. As a result, occurrence of delamination or the like of the resin-covered cord 26, the tire case 17, and the tread 30 is suppressed, and the durability of the tire 10 is improved.

In the tire 10 of the first embodiment of the invention, as illustrated in FIG. 2, the embedding depth L of the resin-covered cord is 1/5 or greater of the diameter D. Therefore,incorporation of air during manufacture is effectively suppressed and movement of the resin-covered cord 26 due to force input during running or the like is further suppressed.

In the tire 10 of the first embodiment of the invention, the annular bead cores 18 formed of a metal material are respectively embedded in the bead portions 12. Therefore, similarly to conventional rubber-made pneumatic tires, the tire case 17, namely the tire 10, is firmly retained on the rim 20.

In the method of manufacturing the tire according to the first embodiment of the invention, the bonding sections of the tire case half parts 17A are heated using the jointing mold. However, the invention is not restricted thereby. For example, the tire case half parts 17A may be bonded to each other by heating the bonding sections by a separately provided high-frequency heater or the like, or by pre-softening or melting the bonding sections using hot air, irradiation with infrared radiation, or the like, and then pressing the same by the jointing mold.

In the method of manufacturing the tire according to the first embodiment of the invention, the resin-covered cord feeding apparatus 56 includes the two rollers consisting of the first roller 60 and the second roller 64. However, the invention is not restricted thereto, and may include any one of the rollers only (namely, a single roller).

In the method of manufacturing the tire according to the first embodiment of the invention, the embodiment is configured to heat the resin-covered cord 26 to melt or soften portions of the surface of the tire case 17 at which the heated reinforcing cord 26 is in contact. However, the invention is not restricted thereto, and a hot air generation device may be used to heat the outer circumferential surface of the crown portion 16 in which the resin-covered cord 26 is to be embedded, without heating the resin-covered cord 26, and then the resin-covered cord 26 may be embedded in the crown portion 16.

In the method of manufacturing the tire according to the first embodiment of the invention, a heat source of the resin-covered cord heating device 59 is a heater and a fan. However, the invention is not restricted thereto, and the resin-covered cord 26 may be directly heated with radiation heat (such as, for example, by infrared radiation).

Further, in the method of manufacturing the tire according to the first embodiment of the invention, melted or softened portions of the thermoplastic resin material in which the resin-covered cord 26 is embedded are forcibly cooled by the metal second roller 64. However, the invention is not restricted thereto. Configuration may be made such that the melted or softened portions of the thermoplastic resin material are directly blasted with cooling air, and the melted or softened portions of the thermoplastic resin material are forcibly cooled and hardened.

Winding the resin-covered cord 26 in a helical shape is easy in terms of manufacture, but methods in which the resin-covered cord 26 is discontinuously arranged in a width direction, or the like, may also be considered.

The tire 10 according to the first embodiment of the invention is what is called a tubeless tire in which the bead portions 12 are fitted to the rim 20 to form an air chamber between the tire 10 and the rim 20. However, the invention is not restricted thereto, and may be formed into a complete tube shape.

### [Second Embodiment]

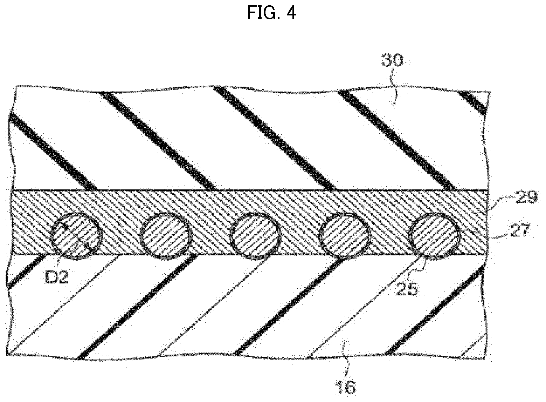

Next, the tire according to a second embodiment of the invention will be described with reference to FIG. 4. FIG. 4 is a cross-sectional view taken along the tire rotation axis and illustrating a state in which a reinforcing cord covering layer in which a reinforcing metal cord member is embedded is on the crown portion of the tire case of the tire according to a second embodiment.

As illustrated in FIG. 4, the tire according to the second embodiment of the invention includes a reinforcing cord covering layer 29 in which the steel cord 27 (the reinforcing metal cord member) is embedded in the surface of the crown portion 16 of the tire case, in which a tread 30 is disposed on the reinforcing cord covering layer 29. The tire according to the second embodiment of the invention has a configuration similar to that of the first embodiment, except in the above points,. The same reference numerals are herein allocated to configurations similar to those of the first embodiment.

In the tire according to the second embodiment of the invention, the tire case 17 is formed using a polyamide-based thermoplastic elastomer, similarly to the first embodiment described above.

As illustrated in FIG. 4, in the tire according to the second embodiment of the invention, the crown portion 16 is provided with the reinforcing cord covering layer 29 in which the steel cord 27 wound in the circumferential direction of the tire case 17 is embedded. A portion of the steel cord 27 is embedded in the surface of the crown portion 16 of the tire case 17 with the adhesion layer 25 therebetween. The reinforcing cord covering layer 29 is formed using a covering composition (covering composition similar to the covering composition 28 in the first embodiment described above) including at least a polyamide-based thermoplastic elastomer. The adhesion layer 25 is formed using a hot melt adhesive (hot melt adhesive similar to that in the first embodiment described above) including an acid-modified olefin-based resin.

A layer thickness of the reinforcing cord covering layer 29 is not particularly limited, and in consideration of the durability and adhesiveness to the tire case 17 and the tread 30, an average layer thickness is preferably from approximately 0.2 mm to approximately 4.0 mm, more preferably from 0.5 mm to 3.0 mm, and particularly preferably from 0.5 mm to 2.5 mm.

The elastic modulus of the reinforcing cord covering layer 29 is preferably set in the range higher than the elastic modulus of the resin material forming the tire case 17, and lower than the elastic modulus of the steel cord 27. In a case in which the elastic modulus of the reinforcing cord covering layer 29 is 20 times or less as great as the elastic modulus of the thermoplastic resin material forming the tire case 17, the crown portion is not too hard, and fitting onto a rim is easily achieved.

Hereinafter, a method of manufacturing the tire according to the second embodiment of the invention will be described.

### [Frame forming Process]

First, similarly to the first embodiment described above, the tire case half parts 17A are formed, and then heated and pressed with a jointing mold to form the tire case 17.

### [Reinforcing metal cord member Winding Process]

A manufacturing apparatus of the tire according to the second embodiment of the invention is similar to that in first embodiment described above, and the manufacturing apparatus in which the steel cord 27 is wound on the reel 58 in the resin-covered cord feeding apparatus 56 illustrated in FIG. 3 is employed. Then, the steel cord 27 wound on the reel 58 is, similarly to the first embodiment, wound along the outer circumferential surface of the tire case 17 while a portion of the steel cord 27 is embedded in the outer circumferential surface of the tire case 17. In the method of manufacturing the tire according to the second embodiment of the invention, as described below, the reinforcing cord covering layer 29 is formed and then the steel cord 27 is embedded in this layer with the adhesion layer 25 therebetween, whereby the outer circumferential surface of the steel cord 27 is covered with the covering composition including at least a polyamide-based thermoplastic elastomer.

Thus, in the method of manufacturing the tire according to the second embodiment of the invention, a depth L of embedding the steel cord 27 in the crown portion 16 is preferably set at 1/5 or less of a diameter D2 of the steel cord 27.

### [Superposing Process]

Next, the covering composition described above is applied on the outer circumferential surface of the tire case 17 in which the steel cord 27 is embedded using a melt-extruder or the like (unillustrated) to form the reinforcing cord covering layer 29.

Then, a non-vulcanized cushion rubber is wound by a single turn on the formed reinforcing cord covering layer 29, and, for example, an adhesive, such as a rubber cement composition, is applied on the cushion rubber, and then one turn of a tread rubber in a vulcanized or semi-vulcanized state is wound on the adhesive, thereby configuring a base tire case state.

Then, the vulcanized and belt-shaped tread 30 is wound by a single turn on the outer circumferential surface of the tire case 17 which is in the base tire case state. The tread 30 is bonded to the outer circumferential surface of the tire case 17 using a bonding agent or the like. Note that the tread 30 may be, for example, a pre-cured tread employed in conventional known recycled tires. The present process is similar to a process for bonding a pre-cured tread to an outer circumferential surface of a casing of a recycled tire.

Bonding the seal layers 24 formed of a vulcanized rubber to the bead portions 12 of the tire case 17 using a bonding agent or the like completes the tire 10 according to the second embodiment of the invention.

### (Effects)

The tire according to the second embodiment of the invention is provided with the reinforcing cord covering layer 29 on the outer circumferential surface of the tire case 17, in addition to the effects of the tire according to the first embodiment. Therefore, it has an effect that the steel cord 27 can be fixed even more strongly on the tire case 17.

Also in the tire according to the second embodiment of the invention, the steel cord 27 is wound in a helical shape on the crown portion 16, similarly to the first embodiment. However, the invention is not restricted thereto, and the steel cord 27 may be wound so as to be discontinuous in a width direction.

Although the invention have been explained above by way of embodiments, these embodiments are merely exemplifications, and various modifications may be implemented within a range not departing from the scope of the claims. Obviously the scope of rights of the invention is not limited to these embodiments.

### EXAMPLES

Hereinafter, the invention will be specifically described, but this description never restricts the invention.

### [Example 1]

In accordance with the resin-covered cord forming process described above, a multifilament having an average diameter ø of 1.15 mm (a twisted cord formed of twisted mono-filaments having ø of 0.35 mm (made of steel, strength: 280 N, elongation degree: 3%)) was adhered with a hot melt adhesive A-1 described in Table 1 that has been heated and melted at a temperature of 240°C so as to have an average layer thickness of 100 µm, and then covered by a resin N-1 extruded by an extruder, and cooled, whereby a metal reinforcing cord was obtained in which an outer circumference of the multifilament was covered by a covering composition N-1 with an adhesion layer including the hot melt adhesive A-1 therebetween.

A tire was formed using the obtained metal reinforcing cord according to a method similar to the first embodiment described above. N-1 indicated in Table 1 was employed as a material for forming the tire frame.

### [Examples 2 to 11 and 15]

Metal reinforcing cords and tires were manufactured respectively in the same manner as in Example 1, except that the hot melt adhesive A-1 in Example 1was replaced by a hot melt adhesive indicated in Table 1.

### [Example 12]

A metal reinforcing cord and a tire were manufactured in the same manner as in Example 1, except that the covering composition N-1 in Example 1 was replaced by a covering composition indicated in Table 1.

### [Examples 13 and 14]

A metal reinforcing cord and a tire were manufactured in the same manner as in Example 1, except that the hot melt adhesive A-1 and the covering composition N-1 in Example 1 were respectively replaced by a hot melt adhesive and a covering composition indicated in Table 1.

### [Example 16]

In accordance with the resin-covered cord forming process described above, a monofilament having an average diameter ø of 0.35 mm (made of steel, strength: 280 N, elongation degree: 3%) was adhered with a hot melt adhesive A-6 described in Table 1 that has been heated and melted at a temperature of 240°C so as to have an average layer thickness of 100 µm, and then covered by the resin N-1 extruded by the extruder, and cooled, whereby a metal reinforcing cord in which an outer circumference of the monofilament was covered with the covering composition N-1 with an adhesion layer including the hot melt adhesive A-6 therebetween was obtained.

In accordance with a method similar to the first embodiment described above, atire was formed by using the obtained metal reinforcing cord. As a material forming a tire frame, N-1 indicated in Table 1 was employed.

### [Comparative Example 1]

A metal reinforcing cord and a tire were manufactured in the same manner as in Example 1, except that the outer circumference of the multifilament was covered with the covering composition N-1 without the adhesion layer therebetween.

### [Comparative Example 2]

A metal reinforcing cord and a tire were manufactured in the same manner as in Example 1, except that the outer circumference of the multifilament was subjected to organic plating treatment.

### [Comparative Example 3]

In accordance with the resin-covered cord forming process described above, a multifilament having an average diameter ø of 1.15 mm (a twisted cord formed of twisted mono-filaments having ø of 0.35 mm (made of steel, strength: 280 N, elongation degree: 3%)) was applied with a solvent-based adhesive B-1 described in Table 1, and was dried in a drying furnace at a temperature of 70°C for one minute so that an adhesion layer having an average thickness of 10 µm was formed on an outer circumferential surface of the multifilament. Then, an outer circumference of the multifilament on which the adhesion layer was formed was covered by the resin N-1 extruded by the extruder, and cooled, whereby a metal reinforcing cord was obtained in which the outer circumference of the multifilament was covered with the covering composition N-1 with the adhesion layer including the solvent-based adhesive B-1 therebetween.

A tire was formed using the obtained metal reinforcing cord according to a method similar to the first embodiment described above. As a material forming a tire frame, N-1 indicated in Table 1 was employed.

### [Comparative Example 4]

In accordance with the resin-covered cord forming process described above, a monofilament having an average diameter ø of 0.35 mm (made of steel, strength: 280 N, elongation degree: 3%) was applied with the solvent-based adhesive B-1 described in Table 1, and was dried in a drying furnace at a temperature of 70°C for one minute so that an adhesion layer having an average thickness of 10 µm was formed on an outer circumferential surface of the monofilament. Then, an outer circumference of the monofilament on which the adhesion layer was formed was covered by a resin P-2 extruded by the extruder, and cooled, whereby a metal reinforcing cord was obtained in which the outer circumference of the monofilament was covered by a covering composition P-2 with the adhesion layer including the solvent-based adhesive B-1 therebetween.

Then, the obtained metal reinforced cord was wound on a molding drum and cut off at a part on the circumference after being wound, whereby a sheet-shaped belt for tire reinforcement was manufactured.

The manufactured sheet-shaped belt was wound by a single turn on a base tire case, and vulcanized, whereby a vulcanized tire case was manufactured. Then, a tread was disposed and a tire was manufactured using the method of the first embodiment described above. Note that as a tire frame, a conventional rubber-made tire frame material (rubber X) was employed.

### [Comparative Example 5]

In accordance with the resin-covered cord forming process described above, a monofilament having an average diameter ø of 0.35 mm (made of steel, strength: 280 N, elongation degree: 3%) was applied with the solvent-based adhesive B-1 described in Table 1, and was dried in a drying furnace at a temperature of 70°C for one minute so that an adhesion layer having an average thickness of 10 µm was formed on an outer circumferential surface of the monofilament. Then, an outer circumference of the monofilament on which the adhesion layer was formed was covered by a resin P-2 extruded by the extruder, and cooled, whereby a metal reinforcing cord was obtained in which the outer circumference of the monofilament was covered with the covering composition P-2 with the adhesion layer including the solvent-based adhesive B-1 therebetween.

The obtained metal reinforced cord was wound on the base tire case, and vulcanized, whereby a vulcanized tire case was manufactured. Then, a tread was disposed and a tire was manufactured using the method of the first embodiment described above. Note that as a tire frame, a conventional rubber-made tire frame material (rubber X) was employed.

### [Comparative Example 6]

In accordance with the resin-covered cord forming process described above, a multifilament having an average diameter ø of 1.15 mm (a twisted cord formed of twisted mono-filaments having ø of 0.35 mm (made of steel, strength: 280 N, elongation degree: 3%)) was adhered with a hot melt adhesive A-6 described in Table 1 that has been heated and melted at a temperature of 240°C so as to have an average layer thickness of 100 µm, and then covered by the resin N-1 extruded by the extruder, and cooled, whereby a metal reinforcing cord was obtained in which an outer circumference of the multifilament was covered with the covering composition N-1 with an adhesion layer including the hot melt adhesive A-6 therebetween.

The obtained metal reinforced cord was wound on a molding drum using the method of the first embodiment described above and cut off at a part on the circumference after being wound, whereby a sheet-shaped belt for tire reinforcement was manufactured.

Then, the manufactured sheet-shaped belt was wound by a single turn on a tire frame body while being heated at a temperature from 100°C to 250°C, whereby a tire was manufactured. Note that as a material forming the tire frame, N-1 indicated in Table 1 was employed.

### [Comparative Example 7]

In accordance with the resin-covered cord forming process described above, a monofilament having an average diameter ø of 0.35 mm (made of steel, strength: 280 N, elongation degree: 3%) was adhered with a hot melt adhesive A-6 described in Table 1 that has been heated and melted at a temperature of 240°C so as to have an average layer thickness of 100 µm, and then covered by the resin P-2 extruded by the extruder, and cooled, whereby a metal reinforcing cord was obtained in which an outer circumference of the monofilament was covered with the covering composition P-2 with an adhesion layer including the hot melt adhesive A-6 therebetween.

Then, the obtained metal reinforced cord was wound on a molding drum and cut off at a part on the circumference after being wound, whereby a sheet-shaped belt for tire reinforcement was manufactured.

The manufactured sheet-shaped belt was wound by a single turn on a base tire case, and vulcanized, whereby a vulcanized tire case was manufactured. Then, a tread was disposed and a tire was manufactured using the method of the first embodiment described above. Note that as a tire frame, a conventional rubber-made tire frame material (rubber X) was employed.

### [Evaluation]

### 1. Pull-Out Test

### [Examples 1 to 15 and Comparative Example 6]

Pull-out tests were performed according to a procedure described below.

In accordance with the resin-covered cord forming process described above, an outer circumferential surface of a multifilament having an average diameter ø of 1.15 mm (a twisted cord formed of twisted mono-filaments having ø of 0.35 mm (made of steel, strength: 280 N, elongation degree: 3%)) was adhered with a hot melt adhesive described in Table 1 that has been heated and melted so as to form an adhesion layer having an average layer thickness of 100 µm. Then, the multifilament on which this adhesion layer was formed was disposed at the center of a mold having a cylindrical cavity having ø 10 mm and a length of 60 mm, and filled with a covering material (covering composition) indicated in Table 1 to perform an injection molding. Then, from an obtained cylindrical resin material including the metal reinforcing cord, the multifilament was pulled out at an elongation rate of 50 mm/min using an autograph "AG-5KNK" manufactured by Shimadzu Corporation, and a pull-out force (unit: N) was measured during the pull-out. Results are shown in Table 1. Note that the greater measured values of the pull-out force are, the superior pull-out resistance of the reinforcing metal cord members is.

### [Example 16 and Comparative Example 7]

In accordance with the resin-covered cord forming process described above, an outer circumferential surface of a monofilament having an average diameter ø of 0.35 mm (made of steel, strength: 280 N, elongation degree: 3%) was adhered with the hot melt adhesive described in Table 1 that has been heated and melted so as to form an adhesion layer having an average layer thickness of 100 µm. Then, the monofilament on which this adhesion layer was formed was disposed at the center of the mold having a cylindrical cavity having ø 10 mm and a length of 60 mm, and filled with a covering material (covering composition) indicated in Table 1 to perform an injection molding. Then, from an obtained cylindrical resin material including the metal reinforcing cord, the monofilament was pulled out at an elongation rate of 50 mm/min using the autograph "AG-5KNK" manufactured by Shimadzu Corporation, and a pull-out force (unit: N) was measured during the pull-out. Results are shown in Table 1.

### [Comparative Example 1]

A multifilament having an average diameter ø of 1.15 mm (a twisted cord formed of twisted mono-filaments having ø of 0.35 mm (made of steel, strength: 280 N, elongation degree: 3%)) was disposed at the center of the mold having a cylindrical cavity having ø 10 mm and a length of 60 mm, and filled with a covering material (covering composition) indicated in Table 1 to perform an injection molding. Then, from an obtained cylindrical resin material, the multifilament was pulled out at an elongation rate of 50 mm/min using the autograph "AG-5KNK" manufactured by Shimadzu Corporation, and a pull-out force (unit: N) was measured during the pull-out. A result thereof is shown in Table 1.

### [Comparative Example 2]

An outer circumferential surface of a multifilament having an average diameter ø of 1.15 mm (a twisted cord formed of twisted mono-filaments having ø of 0.35 mm (made of steel, strength: 280 N, elongation degree: 3%)) was subjected to organic plating treatment and the multifilament was disposed at the center of the mold having a cylindrical cavity having ø 10 mm and a length of 60 mm, and filled with a covering material (covering composition) indicated in Table 1 to perform an injection molding. Then, from an obtained cylindrical resin material, the multifilament, the outer circumferential surface of which was organic plating treated, was pulled out at an elongation rate of 50 mm/min using the autograph "AG-5KNK" manufactured by Shimadzu Corporation, and a pull-out force (unit: N) was measured during the pull-out. A result thereof is show in Table 1.

### [Comparative Example 3]

In accordance with the resin-covered cord forming process described above, a multifilament having an average diameter ø of 1.15 mm (a twisted cord formed of twisted mono-filaments having ø of 0.35 mm (made of steel, strength: 280 N, elongation degree: 3%)) was applied with a solvent-based adhesive described in Table 1, and was dried in a drying furnace at a temperature of 70°C for one minute so that an adhesion layer having an average thickness of 10 µm was formed on an outer circumferential surface of the multifilament. The multifilament on which this adhesion layer was formed was disposed at the center of the mold having a cylindrical cavity having ø 10 mm and a length of 60 mm, and filled with a covering material (covering composition) indicated in Table 1 to perform an injection molding. Then, from an obtained cylindrical resin material including the metal reinforcing cord, the multifilament was pulled out at an elongation rate of 50 mm/min using the autograph "AG-5KNK" manufactured by Shimadzu Corporation, and a pull-out force (unit: N) was measured during the pull-out.

### [Comparative Examples 4 and 5]

In accordance with the resin-covered cord forming process described above, a monofilament having an average diameter ø of 0.35 mm (made of steel, strength: 280 N, elongation degree: 3%) was applied with a solvent-based adhesive described in Table 1, and was dried in a drying furnace at a temperature of 70°C for one minute so that an adhesion layer having an average thickness of 10 µm was formed on an outer circumferential surface of the multifilament. The monofilament on which this adhesion layer was formed was disposed at the center of the mold having a cylindrical cavity having ø 10 mm and a length of 60 mm, and filled with a covering material (covering composition) indicated in Table 1 to perform an injection molding. Then, from an obtained cylindrical resin material including the metal reinforcing cord, the monofilament was pulled out at an elongation rate of 50 mm/min using the autograph "AG-5KNK" manufactured by Shimadzu Corporation, and a pull-out force (unit: N) was measured during the pull-out.

### 2. Hydraulic Pressure Strength Test

The tires manufactured in the examples described above and the comparative examples described above were employed in a hydraulic pressure strength test. The tires were each mounted on a rim having a rim size of 13 × 4.5 J, and then supplied with water to continuously increase an inner pressure. Then, pressures at the time of fracture of the tires were measured and evaluation was performed according to evaluation criteria described below. Results are shown in Table 1. Note that the higher pressures at the time of fracture are, the superior the durability of the tires is, and it is considered that what is classified into [A] or [B] is practically preferable.

### Evaluation criteria

A: Pressure at the time of fracture was 1800 kPa or more.
B: Pressure at the time of fracture was 1500 kPa or more but less than 1800 kPa
C: Pressure at the time of fracture was 1200 kPa or more but less than 1500 kPa.
D: Pressure at the time of fracture was less than 1200 kPa.

### 3. Durability Drum Test

The tires manufactured in the examples described above and the comparative examples described above were employed in a durability drum test. The tires were adjusted to an internal pressure of 3.0 kg/cm² in a room having a temperature of 25°C plus or minus 2°C, and then left for 24 hours. Then, pneumatic pressures were adjusted again, a load twice as great as a JIS load was applied to the tires, and the tires were made to run on a drum having a diameter of approximately 3 m at a speed of 60 km/h for 20000 km at the maximum. Then, distances traveled until a failure of the tires occurs were measured, and evaluation was performed according to evaluation criteria described below. Results are shown in Table 1. Note that the longer the distances traveled are, the superior the durability of the tires is, and it is considered that what is classified into [A] or [B] is practically preferable.

### Evaluation criteria

A: 20000 km traveled.
B: Distance traveled was 15000 km or more but less than 20000 km.
C: Distance traveled was 10000 km or more but less than 15000 km.
D: Distance traveled was less than 10000 km.

**Table 1**

| Examples 11 and 15 are included by way of reference. | | | | | | | | | |
|---|---|---|---|---|---|---|---|---|---|
| | Adhesion means | | Material for covering Cord member | Material for forming Tire frame | Structure of Cord member | Configuration of Reinforcement | Evaluation Test | | |
| | | | | | | | Cord | Tire Performance | |
| | | | | | | | Pull-out Force (N) | Hydraulic Pressure | Durability Drum |
| Comparative Example 1 | None | | | | | | 799 | D | D |
| Comparative Example 2 | Surface Treatment | Organic Plating Treatment | | | | | 1128 | C | C |
| Example 1 | | A-1 | | | | | 1523 | A | A |
| Example 2 | | A-2 | | | | | 1576 | A | A |
| Example 3 | | A-3 | | | | | 1602 | A | A |
| Example 4 | | A-4 | N-1 | | | | 1313 | B | B |
| Example 5 | | A-5 | | | | | 1507 | A | A |
| Example 6 | | A-6 | | | Multifilament | | 1737 | A | A |
| Example 7 | | A-7 | | | | | 1724 | A | A |
| Example 8 | Hot Melt Adhesive | A-8 | | N-1 | | Cord Winding | 1587 | A | A |
| Example 9 | | A-9 | | | | | 1206 | B | B |
| Example 10 | | A-10 | | | | | 1263 | B | B |
| Example 11 | | A-11 | | | | | 1239 | B | B |
| Example 12 | | A-1 | P-1 | | | | 1123 | B | B |
| Example 13 | | A-6 | P-2 | | | | 1310 | B | B |
| Example 14 | | A-6 | P-3 | | | | 1241 | B | B |
| Example 15 | | A-12 | N-1 | | | | 1262 | B | B |
| Example 16 | | A-6 | | | Monofilament | | 1554 | B | B |
| Comparative Example 3 | Solvent-based Adhesive | B-1 | | | Multifilament | | 1340 | B | C |
| Comparative Example 4 | Solvent-based Adhesive | B-1 | P-2 | Rubber X | Monofilament | Sheet-shaped Belt | 1227 | C | D |
| Comparative Example 5 | Solvent-based Adhesive | B-1 | P-2 | Rubber X | Monofilament | Cord Winding | 1227 | B | C |
| Comparative Example 6 | Hot Melt Adhesive | A-6 | N-1 | N-1 | Multifilament | Sheet-shaped Belt | 1737 | C | D |
| Comparative Example 7 | Hot Melt Adhesive | A-6 | P-2 | Rubber X | Monofilament | Sheet-shaped Belt | 1127 | C | D |

Components in the table are indicated below.
A-1: "ADMER QE-060" manufactured by Mitsui Chemicals, Inc. (maleic acid-modified olefin-based resin (polypropylene resin), melting temperature: 143°C)
A-2: "ADMER QF-500" manufactured by Mitsui Chemicals, Inc. (maleic acid-modified olefin-based resin (polypropylene resin), melting temperature: 165°C)
A-3: "ADMER QF-551" manufactured by Mitsui Chemicals, Inc. (maleic acid-modified olefin-based resin (polypropylene resin), melting temperature: 135°C)
A-4: "MODIC P502" manufactured by Mitsui Chemicals, Inc. (maleic acid-modified olefin-based resin (polypropylene resin), melting temperature: 168°C)
A-5: "MODIC P553A" manufactured by Mitsui Chemicals, Inc. (maleic acid-modified olefin-based resin (polypropylene resin), melting temperature: 123°C)
A-6: "MODIC P555" manufactured by Mitsui Chemicals, Inc. (maleic acid-modified olefin-based resin (polypropylene resin), melting temperature: 168°C)
A-7: "MODIC H503" manufactured by Mitsui Chemicals, Inc. (maleic acid-modified olefin-based resin (polyethylene resin), melting temperature: 123°C)
A-8: Special resin V (ethylene-vinyl acetate copolymer, melting temperature: 123°C)
A-9: "F-101B" manufactured by Kuraray Co., Ltd. (ethylene-vinyl acetate copolymer, melting temperature: 183°C)
A-10: Special resin B (ethylene-ethyl acrylate copolymer, melting temperature: 105°C)
A-11: "ARONMELT PES Series" manufactured by Toagosei Co., Ltd. (polyester-based resin, melting temperature: 120°C)
A-12: "METALOC B" manufactured by Toyo Kagaku Kenkyusho Co., Ltd. (synthetic rubber-based adhesive)
B-1: "METALOC PH-37" manufactured by Toyo Kagaku Kenkyusho Co., Ltd. (epoxy-based adhesive)
N-1: "UBESTA XPA9055X1" manufactured by Ube Industries Ltd. (polyamide-based thermoplastic elastomer)
P-1: "HYTREL 5557" manufactured by DuPont-Toray Co., Ltd. (polyester-based thermoplastic elastomer)
P-2: Composition indicated in Table 2
P-3: "3024U" manufactured by Ube Industries Ltd. (amide-based thermoplastic resin)

**Table 2**

| | Parts by mass |
|---|---|
| Br-IPMS*¹ | 100 |
| Zinc Oxide | 0.5 |
| Stearic Acid | 0.2 |
| Zinc Stearate | 1 |
| N-6,66*² | 100 |
| Maleic Anhydride-Modified EEA* ³ | 10 |
| Plasticizer*⁴ | 10 |

| | |
|---|---|
| *1: EXXPRO MDX89-E manufactured by ExxonMobile Chemical Company *2: UBENYLON 5033B manufactured by Ube Industries *3: HPR-AR201 manufactured by Mitsui Dupont Polychemical *4: BM-4 manufactured by Daihachi Chemical Industry | |

As indicated in Table 1, the metal reinforcing cords of the tires in the examples have higher pull-out resistance in comparison with the metal reinforcing cords of the tires in the comparative examples. The tires in which these metal reinforcing cords having high pull-out resistance are each wound on an outer circumference of a tire frame are excellent in durability in comparison with the tires in the comparative examples.

## Claims

1. A tire comprising:
a circular tire frame formed from a resin material; and
a reinforcing metal cord member that is wound on an outer circumference of the tire frame, at least a portion of the reinforcing metal cord member being covered, via an adhesion layer including a hot melt adhesive, with a covering composition that comprises at least one thermoplastic material selected from the group consisting of a thermoplastic resin and a thermoplastic elastomer, wherein the hot-melt adhesive comprises at least one kind selected from a modified olefin-based resin, an ethylene-ethyl acrylate copolymer, or an ethylene-vinyl acetate copolymer.

2. The tire of claim 1, wherein the average layer thickness of the adhesion layer is from 5 µm to 200 µm.

3. The tire of claim 1 or 2, wherein the thermoplastic material included in the covering composition is at least one selected from the group consisting of a polyamide-based thermoplastic resin, a polyester-based thermoplastic resin, an olefin-based thermoplastic resin, a polyamide-based thermoplastic elastomer, a polyester-based thermoplastic elastomer, and an olefin-based thermoplastic elastomer.

4. The tire of any one of claims 1 to 3, wherein the thermoplastic material included in the covering composition is at least one selected from the group consisting of a polyamide-based thermoplastic elastomer, a polyester-based thermoplastic elastomer, and an olefin-based thermoplastic elastomer.

5. The tire of any one of claims 1 to 4, wherein the hot melt adhesive includes an acid-modified olefin-based resin.

6. The tire of any one of claims 1 to 5, wherein the resin material that forms the tire frame is a polyamide-based thermoplastic elastomer.

7. The tire of any one of claims 1 to 6, wherein the resin material that forms the tire frame and the thermoplastic material included in the covering composition are thermoplastic resins or thermoplastic elastomers of the same type.

8. The tire of any one of claims 1 to 7, wherein the covering composition for covering
the reinforcing metal cord member includes a polyamide-based thermoplastic elastomer;
the hot-melt adhesive includes a modified olefin-based resin modified with an unsaturated carboxylic acid, or an ethylene-vinyl acetate copolymer;
the reinforcing metal cord member includes a multifilament strand; and
an average thickness of the adhesive layer is in a range of from 5 µm to 200 µm.

## Patentansprüche

1. Reifen umfassend:
einen ringförmigen Reifenrahmen, der aus einem Harzmaterial gebildet ist; und
ein verstärkendes Metallcordelement, das auf einen Außenumfang des Reifenrahmens gewunden ist, wobei mindestens ein Teil des verstärkenden Metallcordelements durch eine Klebstoffschicht, die einen Heißschmelzklebstoff enthält, mit einer Deckzusammensetzung bedeckt ist, die mindestens eines von einem thermoplastischen Material umfasst ausgewählt aus der Gruppe bestehend aus einem thermoplastischen Harz und einem thermoplastischen Elastomer, wobei der Heißschmelzklebstoff mindestens eine Art umfasst ausgewählt unter einem modifizierten Harz auf Olefinbasis, einem Ethylen-Ethylacrylat-Copolymer oder einem EthylenVinylacetat- Copolymer.

2. Reifen nach Anspruch 1, wobei die durchschnittliche Schichtdicke der Klebstoffschicht 5 µm bis 200 µm beträgt.

3. Reifen nach Anspruch 1 oder 2, wobei das thermoplastische Material, das in der Deckzusammensetzung eingeschlossen ist, mindestens eines ist ausgewählt aus der Gruppe bestehend aus einem thermoplastischen Harz auf Polyamidbasis, einem thermoplastischen Harz auf Polyesterbasis, einem thermoplastischen Harz auf Olefinbasis, einem thermoplastischen Elastomer auf Polyamidbasis, einem thermoplastischen Elastomer auf Polyesterbasis und einem thermoplastischen Elastomer auf Olefinbasis.

4. Reifen nach einem der Ansprüche 1 bis 3, wobei das thermoplastische Material, das in der Deckzusammensetzung eingeschlossen ist, mindestens eines ist ausgewählt aus der Gruppe bestehend aus einem thermoplastischen Elastomer auf Polyamidbasis, einem thermoplastischen Elastomer auf Polyesterbasis und einem thermoplastischen Elastomer auf Olefinbasis.

5. Reifen nach einem der Ansprüche 1 bis 4, wobei der Heißschmelzklebstoff ein säuremodifiziertes Harz auf Olefinbasis enthält.

6. Reifen nach einem der Ansprüche 1 bis 5, wobei das Harzmaterial, das den Reifenrahmen bildet, ein thermoplastisches Elastomer auf Polyamidbasis ist.

7. Reifen nach einem der Ansprüche 1 bis 6, wobei das Harzmaterial, das den Reifenrahmen bildet, und das thermoplastische Material, das in der Deckzusammensetzung eingeschlossen ist, thermoplastische Harze oder thermoplastische Elastomere desselben Typs sind.

8. Reifen nach einem der Ansprüche 1 bis 7, wobei die Deckzusammensetzung zum Bedecken des verstärkenden Metallcordelements ein thermoplastisches Elastomer auf Polyamidbasis enthält; der Heißschmelzklebstoff ein modifiziertes Harz auf Olefinbasis, das mit einer ungesättigten Carbonsäure modifiziert ist, oder einen Ethylen-Vinylacetat-Copolymer enthält;
das verstärkende Metallcordelement einen Multifilamentstrang enthält; und
eine durchschnittliche Dicke der Klebstoffschicht in einem Bereich von 5 µm bis 200 µm liegt.

## Revendications

1. Pneumatique comprenant:
une carcasse circulaire de pneumatique formée à partir d'un matériau de résine; et
un élément câblé métallique de renforcement qui est enroulé sur une circonférence externe de la carcasse de pneumatique, au moins une partie de l'élément câblé métallique de renforcement étant recouverte, via une couche d'adhésion comprenant un adhésif thermofusible, d'une composition de recouvrement qui comprend au moins l'un d'un matériau thermoplastique sélectionné dans le groupe constitué d'une résine thermoplastique et d'un élastomère thermoplastique, l'adhésif thermofusible comprenant au moins un type sélectionné parmi une résine à base d'oléfine modifiée, un copolymère d'éthylène-acrylate d'éthyle, ou un copolymère d'éthylène-acétate de vinyle.

2. Pneumatique selon la revendication 1, l'épaisseur moyenne de couche de la couche d'adhésion étant de 5 µm à 200 µm.

3. Pneumatique selon la revendication 1 ou 2, le matériau thermoplastique inclus dans la composition de recouvrement étant au moins l'un sélectionné dans le groupe constitué d'une résine thermoplastique à base de polyamide, d'une résine thermoplastique à base de polyester, d'une résine thermoplastique à base d'oléfine, d'un élastomère thermoplastique à base de polyamide, d'un élastomère thermoplastique à base de polyester, et d'un élastomère thermoplastique à base d'oléfine.

4. Pneumatique selon l'une quelconque des revendications 1 à 3, le matériau thermoplastique inclus dans la composition de recouvrement étant au moins l'un sélectionné dans le groupe constitué d'un élastomère thermoplastique à base de polyamide, d'un élastomère thermoplastique à base de polyester, et d'un élastomère thermoplastique à base d'oléfine.

5. Pneumatique selon l'une quelconque des revendications 1 à 4, l'adhésif thermofusible comprenant une résine à base d'oléfine modifiée avec un acide.

6. Pneumatique selon l'une quelconque des revendications 1 à 5, le matériau de résine qui constitue la carcasse de pneumatique étant un élastomère thermoplastique à base de polyamide.

7. Pneumatique selon l'une quelconque des revendications 1 à 6, le matériau de résine qui constitue la carcasse de pneumatique et le matériau thermoplastique inclus dans la composition de recouvrement étant des résines thermoplastiques ou des élastomères thermoplastiques du même type.

8. Pneumatique selon l'une quelconque des revendications 1 à 7, la composition de recouvrement pour recouvrir l'élément câblé métallique de renforcement comprenant un élastomère thermoplastique à base de polyamide; l'adhésif thermofusible comprenant une résine à base d'oléfine modifiée modifiée avec un acide carboxylique insaturé, ou un copolymère d'éthylène-acétate de vinyle;
l'élément corde métallique de renforcement comprenant un brin multifilament; et
une épaisseur moyenne de la couche adhésive se situant dans une plage de 5 µm à 200 µm.
